# EUROPEAN PATENT APPLICATION

(11) **EP 4 428 075 A1**
(43) Date of publication of application: **11.09.2024**
(21) Application number: 23217508.3
(22) Date of filing: 18.12.2023
(51) Int. Cl.: B65H 19/18, B65H 35/00

(54) **METHOD AND APPARATUS FOR IMPLEMENTING A CHANGE OF COIL OF ELECTRODE WEB FOR THE PRODUCTION OF ELECTROCHEMICAL CELLS**

(30) Priority: 06.03.2023 IT 202300004032; 06.03.2023 IT 202300004026; 06.03.2023 IT 202300004050
(71) Applicant: G.D S.p.A., 40133 Bologna (BO) (IT)
(72) Inventor: ESPOSTI, Marco, I-40133 Bologna (IT); RIZZO, Gennaro, I-40133 Bologna (IT)
(74) Representative: Porta & Consulenti Associati S.p.A.

(57) **Abstract**

A method for joining a first electrode web to a second electrode web comprises: providing a first free end (11) of a first electrode web (n1); providing a second free end (l2) of a second electrode web (f2) at said first free end (11) of the first electrode web (f1); applying a first connection element (60b) at said first free end (11) and second free end (l2); applying a second connection element (70b) at said first free end (11) and second free end (l2).

## Description

The present invention refers to a method and an apparatus relating to the production of an electric battery of the type usable in applications in which it is necessary to provide electric energy. In particular, the present invention relates to a method and apparatus for joining a first electrode web to a second electrode web for implementing a change of coil of electrode web for the production of electrochemical cells, in particular of the rechargeable type.

Electrochemical cells are devices that convert chemical energy into electrical energy with a reversible redox reaction and that convert electrical energy into chemical energy by reversing said redox process. A primary or secondary electrical battery comprises one or more electrochemical cells connected to each other in series or in parallel.

The electrochemical cells comprise a casing containing two electrodes, anode and cathode, separated by one or more electrolytic separators. The anode, the cathode and the separators are in the form of thin sheets or overlapping foils forming a multilayer, with the separators alternated to anode and cathode.

Typically, the electrodes are composed of different materials. For example, the electrodes comprise a thin metal layer, for example of copper or aluminium, which is coated on one side or both sides with an electrochemically active material. In other examples, the electrodes may be composed of a polymeric binder, a conductive additive, and an electrochemically active material. The main function of the polymeric binder is to retain the active material together with the conductive additive. The separators instead consist, for example, of an electrically insulating polymeric membrane.

In the cylindrical and prismatic electrochemical cells, the multilayer is composed of an anode, a cathode and two separator sheets alternately overlapped, wound in a winding, respectively cylindrical or prismatic, called "*jelly roll*" or "*Swiss roll*"*,* and inserted into the cavity of a hollow container. The cathode is placed in electrical contact with an electrical pole placed on the bottom of the hollow container and electrically isolated from the container itself. The anode is placed in electrical contact with a cover which is placed to close the container and which creates a further electrical pole.

In the electrochemical cells obtained by "*z-folding*", the multilayer is composed of a single separator sheet folded multiple times to form several layers, between which one or more anode sheets and one or more cathode sheets are alternately interposed. The multilayer thus obtained is placed in a casing, for example an envelope, or "pouch", from which electrical terminals connected respectively to the anode or cathode sheets emerge.

Examples of such applications are the lithium-ion rechargeable batteries, nickelcadmium rechargeable batteries and nickel-metal hydride rechargeable batteries.

In the Applicant's experience, in the production of electrochemical cells the material for the electrodes (anode and/or cathode) is continuously fed to a forming station for the assembly of the electrodes with the separators. For the continuous feeding of the electrode material for the anode and for the cathode, a coil is used on which an electrode foil is wound, which will be indicated below with electrode web.

When the web in a coil is about to run out, it is necessary to join a final part of the electrode web in use with the initial part of an electrode web of a new coil.

The Applicant has observed that the change of coil of electrode web should be performed in the shortest possible time so that the packaging machine in the forming station can continue to produce while the coil of electrode web in use is stationary.

To avoid a machine stoppage during the joining procedure, use can be made of a buffer of electrode material originating from the coil in use and acting as a reserve. A shorter time for changing the coil of electrode web would allow to have a smaller buffer of material and therefore to have less waste.

In Applicant's experience, the operations to replace a coil of electrode web with a new coil typically require the presence of an operator, for example to mount the new coil, move or remove the spent coil, and/or to facilitate or join the electrode web.

In this regard, it can be noted that the environment in which the machines for the production of the electrochemical cells are housed is a dry room (typically with a relative humidity level not above 5%), in which an operator can stay for a limited time and then leave and hydrate him-herself. A saving of time for the change of coil of electrode web would allow a reduction in the time spent in the dry room, if the direct supervision of an operator is necessary.

The Applicant has found that the first electrode web and the second electrode web may have dust on their surface and/or be greasy or oily, which makes it difficult to have any connection elements adhere to the electrode webs and tends to make them detach under the stresses caused by subsequent processing stations.

The Applicant has perceived that the providing two unwound pieces of electrode web, respectively, from the coil in use and from the new coil and each having a respective free end, in such a way that the respective free ends of the two pieces of electrode web are placed next to each other, and the application of connection elements to both pieces of electrode web at the free ends allows the electrode webs to be joined.

The Applicant has also perceived that applying a first connection and a second connection element on opposite sides of both electrode webs allows for a particularly strong junction despite the presence of dust or greasy substances on the electrode webs.

The present invention relates to a method and apparatus for joining a first electrode web to a second electrode web to implement a change of coil of electrode web for the production of electrochemical cells and an electrode web semi-finished product for the production of electrochemical cells.

In accordance with a first aspect of the present invention, a method for joining a first electrode web to a second electrode web to implement a change of coil of electrode web for the production of electrochemical cells is provided.

Method for joining a first electrode web to a second electrode web to implement a change of coil of electrode web for the production of electrochemical cells, comprising:
Preferably, a first free end of a first electrode web is provided, said first electrode web comprising a first surface portion extending from said first free end and a second surface portion extending from said first free end, opposite to said first surface portion.

Preferably, a second free end of a second electrode web is provided at said first free end of the first electrode web, said second electrode web comprising a first surface portion extending from said second free end and a second surface portion extending from said second free end, opposite said first surface portion.

Preferably, it is applied a first connection element at said first free end and second free end by shifting a first applicator towards said first surface portion of the first electrode web and first surface portion of the second electrode web and releasing said first connection element from said first applicator.

Preferably, it is applied a second connection element at said first free end and second free end by shifting a second applicator towards said second surface portion of the first electrode web and second surface portion of the second electrode web and releasing said second connection element from said second applicator.

In accordance with a second aspect of the present invention, an apparatus for joining a first electrode web to a second electrode web to implement a change of coil of electrode web for the production of electrochemical cells is provided.

Preferably, a first retaining device configured to retain a first free end of a first electrode web keeping the first free end in a junction area is provided, said first electrode web comprising a first surface portion extending from said first free end and a second surface portion extending from said first free end, opposite to said first surface portion.

Preferably, a second retaining device configured to retain a second free end of a second electrode web keeping the second free end in said junction area at said first free end is provided, said second electrode web comprising a first surface portion extending from said second free end and a second surface portion extending from said second free end, opposite to said first surface portion.

Preferably, a first applicator movable between a rest position external to said junction area and an application position in said junction area in which said first applicator is configured to apply a first connection element at said first free end and second free end, on the first surface portion of the first electrode web and on the first surface portion of the second electrode web is provided;

Preferably, a second applicator movable between a rest position external to said junction area and an application position in said junction area wherein said second applicator is configured to apply a second connection element at said first free end and second free end, on the second surface portion of the first electrode web and on the second surface portion of the second electrode web is provided.

In accordance with a third aspect of the present invention, an electrode web semi-finished product for the production of electrochemical cells is provided.

Preferably, a first electrode web extending along a plurality of processing stations of an electrochemical cell production line is provided, said first electrode web comprising a first free end, a first surface portion extending from said first free end and a second surface portion extending from said first free end, opposite to said first surface portion.

Preferably, a second electrode web partially wound into a coil of electrode web and partially unwound from said coil of electrode web is provided, said second electrode web comprising a second free end unwound from said coil of electrode web and arranged at said first end of the first electrode web, a first surface portion extending from said second free end and a second surface portion extending from said second free end, opposite to said first surface portion.

Preferably, a first connection element is provided attached to said first surface portion of the first electrode web and first surface portion of the second electrode web, at said first free end and second free end.

Preferably, a second connection element is provided attached to said second surface portion of the first electrode web and second surface portion of the second electrode web, at said first free end and second free end.

Providing the second free end at the first free end allows arranging the second electrode web in substantial continuity with the first electrode web.

The first connection element is applied at the first surface portion of the first electrode web and the first surface portion of the second electrode web, the second connection element is applied at the second surface portion of the first electrode web and the second surface portion of the second electrode web, i.e. on the opposite side with respect to the first connection element.

In this way, the first electrode web and the second electrode web are joined by two mutually opposite connection elements. The Applicant has found that the two opposite connection elements cooperate to keep the first free end to the second free end and improve the tightness of the junction in the presence of dust or greasy/oily substances.

The Applicant has further found that, since the electrode webs are relatively rigid in bending, a specular junction with respect to the longitudinal axis greatly improves the transmission of stresses between the first free end and the second free end.

By the term "web" is typically meant a body having a length measured along a longitudinal direction, a width measured along a transverse direction orthogonal to the longitudinal direction, and a thickness measured along a direction orthogonal to both the longitudinal direction and the transverse direction, wherein the thickness is at least two orders of magnitude less than the length and at least one order of magnitude less than the width.

In a non-limiting manner, the total length of the electrode web wound on a new coil for anode or cathode of electrochemical cells may be 4-8 orders of magnitude greater than its thickness and 2-4 orders of magnitude greater than its width.

Still by way of example, thicknesses of the electrode webs for the production of anode and/or cathode for electrochemical cells can be comprised from 40 to 220 µm.

The electrode webs are moved along the respective advancement paths while being unwound from the respective coils and/or fed to the forming station. By the expression "upstream" it is meant, unless otherwise specified, a position which, following the advancement path of the electrode web, is placed towards the respective feeding coil and/or away from the forming station. By the expression "downstream" it is meant, unless otherwise specified, a position which, following the advancement path of the electrode web, is placed away from the respective feeding coil and/or towards the forming station.

Typically, each electrode web has longitudinal edges along its length, wherein the longitudinal edges of the electrode web during its unwinding from a coil are aligned with the advancement path of the web itself while the web is being fed.

By "free end" of an electrode web (first or second) is meant an end of the unwound portion of the unwound electrode web, the free end being transverse to the longitudinal edges of the web.

By "end portion" of an electrode web is meant an end portion of the electrode web comprising, at one end thereof, the free end.

By the term "adhesive", in particular referred to an adhesive tape, is meant the ability of a body to attach to a surface on which it is applied, for example by means of an adhesive provided on the body.

By the expressions "in alignment" or "in mutual alignment", when referred to the mutual positioning between the first free end of the second portion of the first piece of electrode web and the second free end of the first portion of the second piece of electrode web it is meant that the first end portion and the second end portion are arranged along a common lying plane.

By the expression "at" when referred to the displacement in mutual approach or to the mutual arrangement between the first free end and the second free end it is generally meant a proximity between the two ends. In preferred embodiments, proximity between the two free ends means a mutual positioning at a distance (understood in this context as minimum distance) less than or equal to 10 mm, preferably less than or equal to 5 mm, even more preferably less than or equal to 3 mm.

By the expression "physical contact" it is meant in the present description and in the subsequent claims a direct contact between two parts or components without means interposed between the two parts or components.

By the expression "substantially in contact" when referred to the mutual position of the retaining devices, it is meant that the first retaining device and the second retaining device are separated by a mutual distance along the lying plane of not more than 5 mm, preferably of not more than 3 mm, for example by a distance comprised between 1 and 2 mm.

By the expressions "to join" or "junction" it is meant in this description and in the subsequent claims to join together two or more parts or components so as to form an assembly in which the parts or components of the assembly are mechanically constrained together.

With reference in particular to the junction between a first and second electrode webs, by "to join" or "junction" in the present description and in the subsequent claims it is meant a stable mechanical union between the respective ends (e.g. the free ends) of the first and second electrode webs or between two end portions of the first and second electrode webs, the end portions comprising a respective free end.

In the most general sense, in the present description and in the subsequent claims, the expressions "join" or "junction" do not necessarily provide for a physical contact between the free ends.

The actions of retaining the free ends of the first and second electrode webs and of mutual approach can be implemented automatically, by means of the retaining devices and their movement.

The present invention may have, in one or more of its aspects, at least one of the preferred features described below. Such features may be present individually or in combination with each other, except when expressly stated otherwise, in the method and/or in the apparatus for joining a first electrode web to a second electrode web to implement a change of coil of electrode web for the production of electrochemical cells and/or in the electrode web semi-finished product for the production of electrochemical cells.

Preferably, applying said first connection element and applying said second connection element are performed simultaneously.

Preferably, providing said first free end and arranging said second free end comprise aligning said first electrode web and second electrode web to a common lying plane at said first free end and second free end.

Preferably, said first retaining device and said second retaining device are configured to bring said first electrode web and second electrode web into alignment along a common lying plane at said first free end and second free end.

Preferably, said first connection element and said second connection element are applied specularly with respect to said common lying plane.

Preferably, said first applicator and second applicator are configured to shift between the respective rest and application positions specularly with respect to said lying plane.

Preferably, applying said first applicator comprises pressing said first applicator against said first surface portion of the first electrode web and first surface portion of the second electrode web.

Preferably said first applicator, in the respective application position, is configured press said first connection element towards said second applicator.

Preferably said second applicator, in the respective application position, is configured to press said second connection element towards said first applicator.

Preferably, applying said second connection element comprises pressing said second applicator against said second surface portion of the first electrode web and second surface portion of the second electrode web.

Preferably said second applicator, in the respective application position, is configured to press said second connection element towards said first applicator.

Preferably, pressing said first applicator and pressing said second applicator comprises pressing said first applicator and second applicator in reciprocal opposition keeping said first free end and second free end between said first applicator and second applicator.

Preferably, applying said first connection element comprises retaining said first connection element to said first applicator while said first applicator is shifted towards said first surface portion of the first electrode web and first surface portion of the second electrode web.

Preferably, said first applicator comprises a first retaining surface configured to retain said first connection element while said first applicator shifts towards the respective application position.

Preferably, applying said second connection element comprises retaining said second connection element to said second applicator while said second applicator is shifted towards said second surface portion of the first electrode web and second surface portion of the second electrode web.

Preferably, said second applicator comprises a second retaining surface configured to retain said second connection element while said second applicator shifts towards the respective application position.

Preferably, said first retaining surface comprises a suction surface configured to retain a first adhesive patch having an adhesive face facing towards said junction area.

Preferably, said second retaining surface comprises a suction surface configured to retain a second adhesive patch having an adhesive face facing towards said junction area.

By "suction surface" is meant a perforated surface, the holes of which are in fluid connection with a suction member.

Preferably, said first connection element is an adhesive element.

Preferably, this second connection element is an adhesive element.

Preferably, said first connection element comprises a first adhesive patch.

Preferably, said second connection element comprises a second adhesive patch.

Preferably, said first applicator comprises a first punch.

Preferably, said second applicator comprises a second punch.

Preferably, applying the first connection element comprises punching a first piece of adhesive tape to form said first adhesive patch.

Preferably, applying the second connection element comprises punching a second piece of adhesive tape to form said second adhesive patch.

Preferably, punching the first piece of adhesive tape comprises moving said first punch towards the first piece of adhesive tape along a first punching direction and up to the first free end and to the second free end.

Preferably, punching the second piece of tape comprises moving said second punch towards the second piece of tape along a second punching direction and up to the first free end and to the second free end.

Preferably, moving said first punch towards the first piece of adhesive tape along the first punching direction and up to the first free end and to the second free end is implemented with a single straight and uninterrupted translation of said first punch.

Preferably, moving said second punch towards the second piece of adhesive tape along the second punching direction and up to the first free end and to the second free end is implemented with a single straight and uninterrupted translation of said second punch.

Preferably, a first punching base comprising a punching opening traversable by the first punch is provided.

Preferably, the first punching base abuts said first piece of adhesive tape while said first piece of adhesive tape is punched.

Preferably, a second punching base comprising a punching opening traversable by the second punch is provided.

Preferably, the second punching base abuts said second piece of adhesive tape while said second piece of adhesive tape is punched.

Preferably, moving said first punch towards the first piece of adhesive tape along the first punching direction and up to the first free end and to the second free end comprises inserting the first punch into said punching opening of the first punching base.

Preferably, moving said second punch towards the second piece of adhesive tape along the second punching direction and up to the first free end and to the second free end comprises inserting the second punch into said punching opening of the second punching base.

Preferably, a first rotating body is provided.

Preferably, the first rotating body is placed along the first punching direction of said first punch.

Preferably, said first rotating body has a passage opening.

Preferably, shifting the first applicator towards said first surface portion of the first electrode web and first surface portion of the second electrode web comprises inserting the first applicator through the passage opening of the first rotating body.

Preferably, said first rotating body is switchable to a non-operating position.

Preferably, said first rotating body is switchable to a cutting abutment position alternative to said non-operating position.

Preferably, said first rotating body is switchable between the non-operating position and the cutting abutment position.

Preferably, in the non-operating position of the first rotating body, the passage opening of the first rotating body is traversable by said first applicator in movement between the rest configuration and the application configuration.

Preferably, in the cutting abutment position of the first rotating body, the passage opening of the first rotating body is not traversable by said first applicator.

Preferably, shifting the first applicator towards said first surface portion of the first electrode web and first surface portion of the second electrode web comprises switching the first rotating body to the non-operational position and inserting the first applicator through the passage opening of the first rotating body.

Preferably, a second rotating body is provided.

Preferably, the second rotating body is placed along the second punching direction of said second punch.

Preferably, said second rotating body has a passage opening.

Preferably, shifting the second applicator towards said second surface portion of the first electrode web and second surface portion of the second electrode web comprises inserting the second applicator through the passage opening of the second rotating body.

Preferably, said second rotating body is switchable to a non-operating position.

Preferably, said second rotating body is switchable to a cutting abutment position alternative to said non-operating position.

Preferably, said second rotating body is switchable between the non-operational position and the cutting abutment position.

Preferably, in the non-operating position of the second rotating body the passage opening of the second rotating body is traversable by said second punch in movement between the rest configuration and the application configuration.

Preferably, in the abutment position of the second rotating body, the passage opening of the second rotating body is not traversable by the second applicator.

Preferably, shifting the second applicator towards said second surface portion of the first electrode web and second surface portion of the second electrode web comprises switching the second rotating body to the non-operational position and inserting the second applicator through the passage opening of the second rotating body.

Preferably, providing the first free end of the first electrode web comprises at least partially unwinding the first electrode web from a first coil of electrode web.

Preferably, said first, at least partially unwound electrode web comprises a first piece of not-wound first electrode web defined by a first portion and a second portion.

Preferably, the first electrode web is provided along a first advancement path.

Preferably, providing the first free end of the first electrode web comprises cutting said first piece of electrode web to separate the first portion from the second portion and defining the first free end on the second portion.

Preferably, providing the first free end of the first electrode web comprises retaining the first free end with a first retaining device.

Preferably, providing the second free end of the second electrode web comprises at least partially unwinding the second electrode web from a second coil of electrode web.

Preferably, said second, at least partially unwound electrode web comprises a not-wound second piece of electrode web defined by a first portion and a second portion.

Preferably, the second electrode web is provided along a second advancement path.

Preferably, providing the second free end of the second electrode web comprises cutting said second piece of electrode web to separate the second portion from the first portion and defining the second free end on the first portion.

Preferably, providing the second free end of the second electrode web comprises retaining the second free end with a second retaining device.

Preferably, the first coil of electrode web is the coil in use for feeding the electrode web to a forming station.

Preferably, the second coil of electrode web is a new coil of electrode web which, once the change of coil of electrode web is performed will replace the first coil of electrode web to feed the electrode web to a forming station.

Preferably, a blade is provided.

Preferably, a first counter-blade is provided.

Preferably, the blade and the first counter-blade are configured to cut said not-wound first piece of electrode web between the first portion and the second portion to provide the second portion of the first piece of electrode web with the first free end.

Preferably, cutting said not-wound first piece of electrode web comprises activating a blade and a first counter-blade on said first piece of electrode web.

Preferably, said first counter-blade is placed on said first rotating body.

Preferably, said first counter-blade is rotationally fixed with said first rotating body.

Preferably, said first counter-blade is engageable by said blade when the first rotating body is in the cutting abutment position.

Preferably, activating the first counter-blade comprises switching the first rotating body into the cutting abutment position.

Preferably, said cutting abutment position is alternative to said non-operating position.

Preferably, said first rotating body is in the cutting abutment position when said first applicator is in the rest configuration.

Preferably, a second counter-blade is provided.

Preferably, the blade and the second counter-blade are configured to cut said not-wound second piece of electrode web between the first portion and the second portion in order to provide the first portion of the second piece of electrode web with a second free end.

Preferably, cutting said not-wound second piece of electrode web comprises activating the blade and the second counter-blade on said second piece of electrode web.

Preferably, said second counter-blade is placed on said second rotating body.

Preferably, said second counter-blade is rotationally fixed with said second rotating body.

Preferably, said second counter-blade is engageable by said blade when the second rotating body is in the cutting abutment position.

Preferably, activating the second counter-blade comprises switching the second rotating body to the cutting abutment position.

Preferably, said cutting abutment position is alternative to said non-operating position.

Preferably, said second rotating body is in the cutting abutment position when said second applicator is in the rest configuration.

Preferably, said first rotating body is in the non-operating position when said second rotating body is in the non-operating position.

Preferably, the first and second free ends are provided aligned with each other. In particular, the second portion of the first electrode web and the first portion of the second electrode web are, at the first free end and the second free end respectively, facing each other, on a common lying plane.

Preferably, the alignment between the electrode web unwound from the coil in use and the electrode web of the new coil, at the two respective ends, is of the "head-to-head" type.

Preferably, the first and second advancement paths are arranged side by side to one another.

Preferably, at the first and second pieces of the respective first and second electrode webs, the direction of the first advancement path is parallel to the direction of the second advancement path.

Preferably, the free end of the first and second electrode webs is perpendicular to the respective advancement path.

By the term "perpendicular" to a direction or an axis is meant in the present context an orthogonality within 5 degrees of tolerance.

Preferably, the first portion of the first piece of electrode web is arranged upstream of the second portion of the first piece of electrode web with respect to the first advancement path.

Preferably, the first portion of the first piece of electrode web is contiguous with the second portion of the first piece of electrode web.

Preferably, the first portion of the second piece of electrode web is arranged upstream of the second portion of the second piece of electrode web with respect to the second advancement path.

Preferably, the first portion of the second piece of electrode web is contiguous with the second portion of the second piece of electrode web.

Preferably, the first electrode web and the second electrode web have the same electrode thickness, defined in a direction perpendicular to the longitudinal edges of the respective electrode web.

Preferably, subsequent to joining the second portion of the first piece of electrode web and the first portion of the second piece of electrode web, the second portion of the first piece of electrode web is released from the first retaining device and the first portion of the second piece of electrode web from the second retaining device.

Preferably, the first electrode web is fed to a forming station of an electrochemical cell along the first advancement path by rotating the first coil of electrode web.

Preferably, the rotation of the first coil of electrode web is stopped.

Preferably, upon stopping the first coil of electrode web the first electrode web comprises the first piece of not-wound electrode web.

Preferably, both the first portion and the second portion of the first piece of electrode web are retained, in particular by means the first retaining device.

Preferably, feeding the first electrode web to a forming station of an electrochemical cell, stopping the rotation of the first coil of electrode web, and retaining both the first portion and the second portion of the first piece of electrode web are performed prior to providing the first free end of the first piece of electrode web.

Preferably, providing the first free end comprises cutting the first piece of electrode web to physically separate the first portion from the second portion of the first piece.

Preferably, cutting the first piece of electrode web is implemented while both the first portion and the second portion of the first piece of electrode web are retained.

Preferably, cutting the first piece of electrode web comprises moving the first retaining device from a distanced position to a cutting position retaining both the first portion and the second portion of the first piece of electrode web.

Preferably, retaining the first free end of the first electrode web is implemented by continuing to retain the second portion of the first piece of electrode web after cutting the first piece of electrode web.

Preferably, moving the first retaining device to the cutting position is implemented prior to cutting the second piece of electrode web.

Preferably, the cutting position is a position intermediate between the distanced position and an approached position, wherein in the approached position the first retaining device is substantially in contact with the second retaining device and a cutting position.

Preferably, while continuing to retain the second portion of the first piece of electrode web, the first portion of the first piece of electrode web is released.

Preferably, the second electrode web is unwound along the second advancement path by rotating the second coil of electrode web.

Preferably, the rotation of the second coil of electrode web is stopped.

Preferably, upon stopping the second coil of electrode web the second electrode web comprises the not-wound second piece of electrode web.

Preferably, both the first portion and the second portion of the second piece of electrode web are retained by means of the second retaining device.

Preferably, prior to providing the second free end, the method comprises unwinding the second electrode web along the second advancement path by rotating the second coil of electrode web.

Preferably, the rotation of the second coil of electrode web is stopped, upon stopping the second coil of electrode web the second electrode web comprises the not-wound second piece of electrode web.

Preferably, subsequent to unwinding the second electrode web and prior to stopping the unwinding of the second coil of electrode web, a longitudinal end of the second electrode web is constrained downstream of the second piece of electrode web with respect to the second advancement path.

Preferably, the longitudinal end is constrained to a winder of second electrode web.

Preferably, before providing the first portion of the second piece of electrode web with a second free end, the second piece of electrode web is stretched along the second unwinding path by winding the second electrode web on said winder of second electrode web.

Preferably, providing the second free end comprises cutting the second piece of electrode web to physically separate the first portion from the second portion of the second piece of electrode web.

Preferably, cutting the second piece of electrode web comprises moving the second retaining device from a distanced position to a cutting position retaining both the first portion and the second portion of the second piece of electrode web.

Preferably, moving the second retaining device to the cutting position is implemented prior to cutting the second piece of electrode web.

Preferably, the cutting position of the second piece of electrode web corresponds to a position intermediate between the distanced position and an approached position of the second retaining device, wherein in the approached position the first retaining device is substantially in contact with the second retaining device.

Preferably, retaining the second free end of the second electrode web is implemented by continuing to retain the first portion of the second piece of electrode web after cutting the second piece of electrode web.

Preferably, while continuing to retain the first portion of the second piece of electrode web, the second portion of the second piece of electrode web is released.

Preferably, cutting the first piece of electrode web is implemented with the second retaining device in the distanced position.

Preferably, cutting the second piece of electrode web is implemented with the first retaining device in the respective distanced position.

Preferably, providing the first portion of the second piece of electrode web with a second free end is implemented prior to providing the second portion of the first piece of electrode web with a first free end.

Preferably, moving the first and second retaining devices in mutual approach comprises moving the first retaining device and the second retaining device into respective approach positions to position the second portion of the first piece of electrode web in alignment with the first free end of the second portion of the first piece of electrode web, wherein the second portion of the first piece of electrode web is positioned downstream of the first portion of the second piece of electrode web with respect to the first advancement path so as to bring the first free end into mutual alignment with the second free end.

Preferably, a cutting mechanism configured to cut the first piece of electrode web to define a first free end of a second portion of the first piece of electrode web is provided.

Preferably, the cutting device is configured to cut the second piece of electrode web to define a second free end of a first portion of the second piece of electrode web.

Preferably, a first movement device active on at least one of the first retaining device and the second retaining device is provided.

Preferably, the at least one first movement device is configured to move the first and second retaining devices in mutual approach to bring the first free end of the second portion of the first piece of electrode web and the second free end of the first portion of the second piece of electrode web into mutual alignment.

Preferably, the first retaining device comprises a first retaining element and a second retaining element.

Preferably, the second retaining device comprises a first retaining element and a second retaining element.

Preferably, the first retaining device is configured to operate in three operating conditions:
- a first operating condition in which the first and second retaining elements are active;
- a second operating condition in which only one of the first and second retaining elements is active, and
- a third operating condition in which none of the first and second retaining elements is active.

Preferably, the second retaining device is configured to operate in three operating conditions:
- a first operating condition in which the first and second retaining elements are active;
- a second operating condition in which only one of the first and second retaining elements is active, and
- a third operating condition in which none of the first and second retaining elements is active.

Preferably, the first movement device is active on the first retaining device and is movable between a distanced position, in which the first retaining device is distanced from the second retaining device, an approached position, in which the first retaining device is substantially in contact with the second retaining device, and a cutting position, intermediate between the distanced position and the approached position. Preferably, the cutting device is configured to cut the first piece of electrode web at the cutting position.

Preferably, the distanced position of the first movement device corresponds to the distanced position of the first retaining device.

Preferably, the approached position of the first movement device corresponds to the approached position of the first retaining device.

Preferably, the cutting position of the first movement device corresponds to the cutting position of the first retaining device.

Preferably, the first movement device is configured to move along a first sliding direction.

Preferably, the distanced position and the approached position of the first retaining device lie on a cutting section belonging to a plane on which the cutting direction of the cutting device and the first sliding direction of the first retaining device lie. Preferably, the cutting direction and the first sliding direction are perpendicular to each other.

Preferably, the distanced position, the approached position and the cutting position of the first retaining device are arranged along a straight line parallel to or coincident with the sliding direction of the first movement device.

Preferably the straight line comprising the positions of the first retaining device is perpendicular to the direction of the first advancement path, at least at the first retaining device.

Preferably, the apparatus comprises a second movement device active on the second retaining device and movable between a distanced position, in which the second retaining device is distanced from the first retaining device, an approached position, in which the second retaining device is substantially in contact with the first retaining device, and a cutting position, intermediate between the distanced position and the approached position.

Preferably, the cutting device is configured to cut the second piece of electrode web at the cutting position of the second movement device.

Preferably, the distanced position of the second movement device corresponds to the distanced position of the second retaining device.

Preferably, the approached position of the second movement device corresponds to the approached position of the second retaining device.

Preferably, the cutting position of the second movement device corresponds to the cutting position of the second retaining device.

Preferably, the second movement device is configured to move along a second sliding direction.

Preferably, the distanced position and the approached position of the second retaining device lie on a cutting section belonging to a plane on which the cutting direction of the cutting device and the sliding direction of the second retaining device lie, wherein preferably the cutting direction and the sliding direction are perpendicular to each other.

Preferably, the sliding directions of the first retaining device and of the second retaining device are parallel to each other and the cutting section of the second retaining device corresponds to the aforementioned cutting section of the first retaining device.

Preferably, the distanced position, the approached position and the cutting position of the second retaining device are arranged along a straight line parallel to or coincident with the sliding direction of the second retaining device. Preferably, the straight line defined by the positions of the second retaining device is coincident with the aforementioned straight line defined by the respective positions of the first retaining device.

The Applicant has verified that the positioning configurations of each retaining device can be implemented with movements in only one direction.

Preferably, the cutting position of the first retaining device with respect to the first advancement path of electrode web corresponds to the cutting position of the second retaining device with respect to the second advancement path of electrode web.

The provision of respective cutting positions for both the first electrode web and the second electrode web at the same point of the respective advancement paths between the first portion of the second upstream piece of electrode web and the second portion of the first downstream piece of electrode web allows the implementation of an accurate and rapid junction.

Preferably, when the first movement device is in the cutting position, the second movement device is in the distanced position. Preferably, when the second movement device is in the cutting position the first movement device is in the distanced position.

Preferably, when the first movement device is in the cutting position and the cutting device performs the cutting stroke, the first retaining device is in the first operating condition (i.e., the first and second retaining elements are active).

Preferably, when the first movement device is in the cutting position, the cutting device performs a cutting stroke by moving from a rest position to a plurality of active positions. Preferably, the cutting device also performs a reset stroke by moving between the plurality of active positions and the rest position; during the cutting stroke the cutting device being configured to cut the first piece of electrode web.

Preferably, when the second movement device is in the cutting position and the cutting device performs the cutting stroke, the second retaining device is in the first operating condition.

Preferably, when the second movement device is in the cutting position, the cutting device performs a cutting stroke by moving from a rest position to a plurality of active positions. Preferably, the cutting device also performs a reset stroke by moving between the plurality of active positions and the rest position; during the cutting stroke the cutting device being configured to cut the second piece of electrode web.

Preferably, when the first movement device and the second movement device are in the respective approached positions, the first retaining device and the second retaining device are in the respective second operating conditions (only one of the first and the second retaining element is active).

In this way, the second free end is positioned upstream with respect to the first free end (positioned downstream), in relation to the advancement directions of the first and second electrode webs.

Preferably, in the second operating condition of the second retaining device, the second retaining element of the first retaining device is active to retain the second portion of the first piece of electrode web having the first free end.

Preferably, in the second operating condition, the first retaining element of the second retaining device is active to retain the first portion of the second piece of electrode web having the second free end.

Preferably, the first retaining element and the second retaining element of the first retaining device respectively comprise a first suction surface and a second suction surface.

Preferably, the first retaining element and the second retaining element of the second retaining device respectively comprise a third suction surface and a fourth suction surface.

Each suction surface of the respective retaining element is configured to retain an object, such as an electrode web, by suction.

Preferably, at least when the first retaining device and the second retaining device are in the first operating condition,
- the first suction surface and the second suction surface of the first retaining device lie along a first plane;
- the third suction surface and the fourth suction surface of the second retaining device lie along a second plane, and
- the first plane is parallel to the second plane.

Preferably, the cutting mechanism comprises the cutting device comprising a blade.

Preferably, the cutting mechanism comprises a first counter-blade placed at the first retaining device

Preferably, the cutting mechanism comprises a second counter-blade placed at the second retaining device.

Preferably, the first counter-blade is placed between the first suction surface and the second suction surface of the first retaining device with respect to said first plane.

Preferably, the second counter-blade is placed between the third suction surface and the fourth suction surface of the second retaining device with respect to said second plane.

Preferably, when the cutting device performs the cutting stroke, the blade slidably engages said first counter-blade.

Preferably, when the cutting device performs the cutting stroke, said blade slidingly engages said second counter-blade.

Preferably, the apparatus further comprises an electrode web deflector movable between a rest position and a first interception position.

Preferably, the deflector is movable between the rest position, the first web interception position and a second web interception position.

Preferably, in the first interception position, the electrode web deflector is configured to engage the first electrode web and bring the first electrode web closer to the first retaining device.

Preferably, in the second interception position, the electrode web deflector is configured to engage the second electrode web and bring the second electrode web closer to the second retaining device.

Preferably, the first movement device comprises a first support carriage movable in at least a first sliding direction, wherein the first retaining device is fixedly mounted on the first support carriage.

Preferably, the first sliding direction is perpendicular to the first plane of the first and second suction surfaces.

Preferably, the second movement device comprises a second support carriage movable in at least a second sliding direction, wherein the second retaining device is fixedly mounted on the second support carriage.

Preferably, the second sliding direction is perpendicular to said second plane of the third and fourth suction surface.

Preferably, a spacer is provided.

Preferably, said spacer comprises a pair of opposite first abutment surfaces placed at a first distance and a pair of opposite second abutment surfaces placed at a second distance less than the first distance.

Preferably, said spacer is movable, preferably in rotation, between a first abutment position and a second abutment position.

Preferably, the first abutment position and the second abutment position are angularly spaced by 90°.

Preferably, the first distance between the first abutment surfaces is defined transversely to the first advancement path and to the second advancement path when said spacer is in the first abutment position.

Preferably, the second distance between the second abutment surfaces is defined transversely to the first advancement path and to the second advancement path when said spacer is in the second abutment position.

Preferably, said spacer has a substantially rectangular shape.

Preferably, said rectangular-shaped spacer comprises two short sides on which the first abutment surfaces are defined and two long sides on which the second abutment surfaces are defined.

Preferably, a first stopping member is provided.

Preferably, the first stopping member is fixed to the first movement device.

Preferably, the first stopping member is integral with the first retaining device.

Preferably, in the first abutment position said spacer is configured to stop in abutment to said first stopping member when the first movement device is in the cutting position.

Preferably, in the second abutment position said spacer is configured to stop in abutment to said first stopping member when the first movement device is in the approached position.

Preferably, the first stopping member comprises a first stopping surface configured to abut against said spacer.

Preferably, the first stopping member comprises an adjustment device configured to adjust a position of said first stopping surface with respect to the first retaining device in a direction transverse to the first advancement path.

Preferably, said adjustment device comprises a screw and said first stopping surface is defined at one end of said screw.

Preferably, said first stopping surface is configured to abut against a first abutment surface of the pair of first abutment surfaces of the spacer when the spacer is in the first abutment position.

Preferably, said first stopping surface is configured to abut against a second abutment surface of the pair of second abutment surfaces of the spacer when the spacer is in the second abutment position.

Preferably, a second stopping member is provided.

Preferably, the second stopping member is fixed to the second movement device.

Preferably, the second stopping member is integral with the second retaining device.

Preferably, in the first abutment position said spacer is configured to stop in abutment to said second stopping member when the second movement device is in the cutting position.

Preferably, in the second abutment position said spacer is configured to stop in abutment to said second stopping member when the second movement device is in the approached position.

Preferably, the second stopping member comprises a second stopping surface configured to abut against said spacer.

Preferably, the second stopping member comprises an adjustment device configured to adjust a position of said second stopping surface with respect to the second retaining device in a direction transverse to the second advancement path.

Preferably, said adjustment device comprises a screw and said second stopping surface is defined at one end of said screw.

Preferably, said second stopping surface is configured to abut against a first abutment surface of the pair of first abutment surfaces of the spacer when the spacer is in the first abutment position.

Preferably, said second stopping surface is configured to abut against a second abutment surface of the pair of second abutment surfaces of the spacer when the spacer is in the second abutment position.

Preferably, moving the first retaining device from the distanced position to the cutting position comprises stopping the first retaining device in the cutting position bringing the first stopping member in abutment against the spacer arranged in the first abutment position.

Preferably, moving the second retaining device from the distanced position to the cutting position comprises stopping the second retaining device in the cutting position bringing the second stopping member in abutment against said spacer arranged in the first abutment position.

Preferably, moving the first retaining device and the second retaining device into respective approached positions comprises stopping the first retaining device in the approached position bringing the first stopping member in abutment against said spacer arranged in the second abutment position.

Preferably, moving the first retaining device and the second retaining device into respective approached positions comprises stopping the second retaining device in the approached position bringing the second stopping member in abutment against said spacer arranged in said second abutment position.

Preferably, moving the first retaining device and the second retaining device into respective approached positions is preceded by moving said spacer from the first abutment position to the second abutment position.

Preferably, in the distanced position the first stopping member is not in contact with said spacer.

Preferably, in the distanced position the second stopping member is not in contact with said spacer.

Further characteristics and advantages of the present invention will become clearer from the following detailed description of a preferred embodiment thereof, with reference to the appended drawings and provided by way of indicative and non-limiting example, in which:
- figure 1 is a perspective view of an apparatus for joining a first electrode web to a second electrode web for implementing a change of coil of electrode web for the production of electrochemical cells in accordance with the present invention;
- figure 2 is a perspective view from a different angle of the apparatus of figure 1;
- figure 3 is a front view of the apparatus of figure 1;
- figure 4 is a bottom view of the apparatus of figure 1 with some elements removed to highlight others;
- figure 5A is a perspective view of a part of the apparatus of figure 1;
- figure 5B is a perspective view of a part of the apparatus of figure 1;
- figure 6 is a sectional view of a detail of the apparatus of figure 1;
- figures 7 to 11 are front views of the apparatus of figure 1 represented in different operating configurations of a method for joining a first electrode web to a second electrode web for implementing a change of coil of electrode web for the production of electrochemical cells in accordance with the present invention;
- figure 12 is a sectional view of the apparatus of figure 1 in an operating configuration of a method for joining a first electrode web to a second electrode web for implementing a change of coil of electrode web for the production of electrochemical cells in accordance with the present invention;
- figures 13 to 15 are schematic sectional views of the apparatus of figure 1 represented in different operating configurations of a method for joining a first electrode web to a second electrode web for implementing a change of coil of electrode web for the production of electrochemical cells in accordance with the present invention;
- figure 16 is a conceptual graphical representation to illustrate a positioning configuration of the first and second electrode webs prior to providing the free ends of the respective electrode webs;
- figure 16A is a conceptual graphical representation to illustrate the junction of the first electrode web and the second electrode web;
- figure 17 is a schematic view of an adhesive tape used in a method and apparatus for joining a first electrode web to a second electrode web for implementing a change of coil of electrode web for the production of electrochemical cells in accordance with the present invention;
- figure 18 is a perspective view of a further embodiment of an apparatus for joining a first electrode web to a second electrode web for implementing a change of coil of electrode web for the production of electrochemical cells in accordance with the present invention;
- figures 19 to 21 are sectional views of details of the apparatus of figure 18 in different operating configurations.

The representations in the accompanying figures do not necessarily have to be understood in scale and do not necessarily respect the proportions between the various parts. In the figures, the same or similar elements of different embodiments will be indicated by the same reference numerals.

An apparatus for joining a first electrode web to a second electrode web for implementing a change of coil of electrode web for the production of electrochemical cells is illustrated in the attached figures, where it is indicated generically with reference numeral 1. The apparatus 1 also has the function of joining a first electrode web f1 to a second electrode web f2 to implement a change of coil of electrode web for the production of electrochemical cells.

The apparatus 1 is adoptable in a rechargeable battery cell production line (not illustrated in the figures), wherein a plurality of electrode webs, such as, for example, an electrode web for the formation of the cathode and an electrode web for the formation of the anode, are unwound from respective coils and fed to a forming station of an electrochemical cell where they are, for example, overlapped on each other, wound together continuously and cut to form a plurality of *jelly-rolls.*

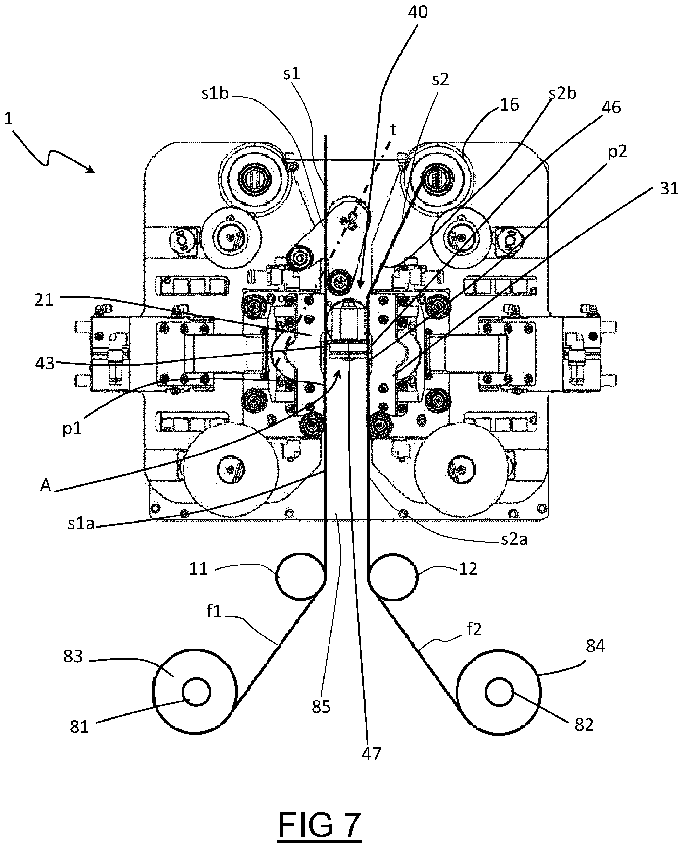

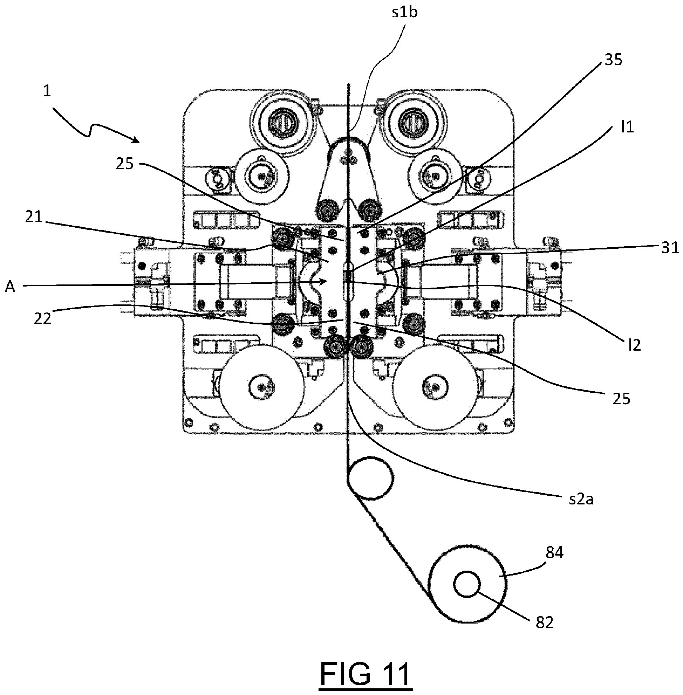

The apparatus 1 can be installed in the production line along the path of an electrode web unwound from a respective coil of electrode web, between two coil supports (illustrated in figures 7-11) and the electrochemical cell forming station. The two coil supports comprise a first coil support 81 configured to support and unwind a first coil of electrode web 83 and a second coil support 82 configured to support and unwind a second coil of electrode web 84. Both the first support 81 and the second support 82 can be used interchangeably to unwind from the respective coil of electrode web 83, 84 the electrode web f1, f2 fed to the forming station (coil in use). A new coil of electrode web is mounted on the unused support 81, 82 and is to be fed to the forming station when the coil in use runs out or needs to be replaced.

In a non-limiting manner, in the embodiments shown in the figures and in the description thereof that follows, the first coil of electrode web 83 mounted on the first support 81 is the coil in use and the second coil of electrode web 84 mounted on the second support 82 is the new coil.

In the embodiments illustrated in the figures, the first and second coil supports 81, 82 are positioned externally to the apparatus 1.

On the first coil support 81 there is mounted the coil of electrode web 83 from which a first electrode web f1 fed to the forming station is unwound; on the second coil support 82 it can be mounted a coil 84 of a second virgin electrode web f2 before the coil of electrode web 83 in use runs out, so that the electrode web f2 from the virgin coil 84 can be unwound and fed to the forming station downstream immediately after the coil of electrode web 83 in use runs out.

The apparatus 1 comprises a fixed support 2. The fixed support 2 has an inlet portion 85 and an outlet portion 86, wherein the inlet and outlet portion 85, 86 are positioned on opposite sides of the fixed support 2 and wherein the outlet portion 86 is proximal to the forming station with respect to a generic advancement path of the electrode web to the forming station.

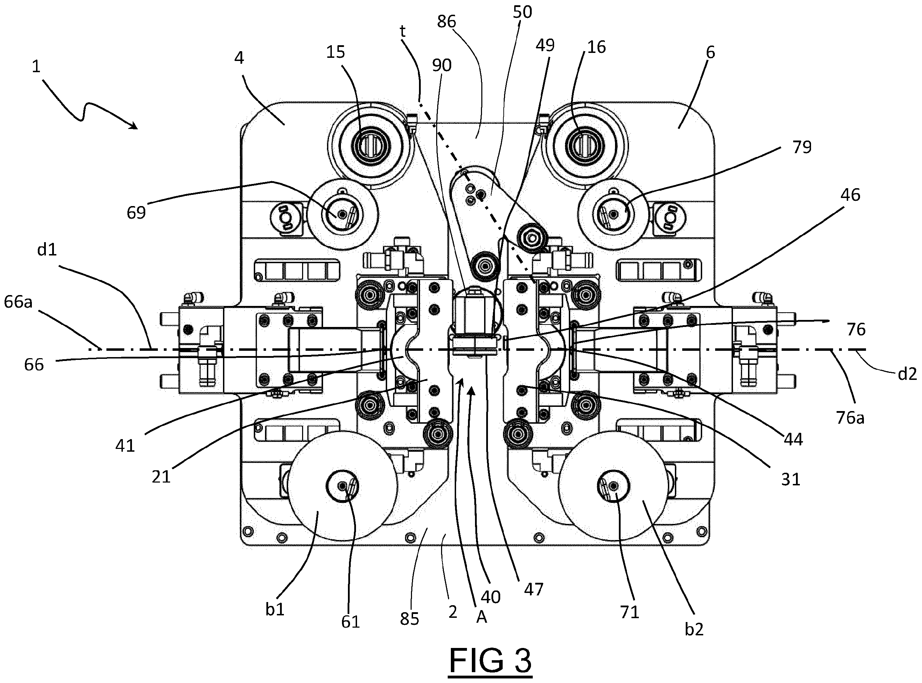

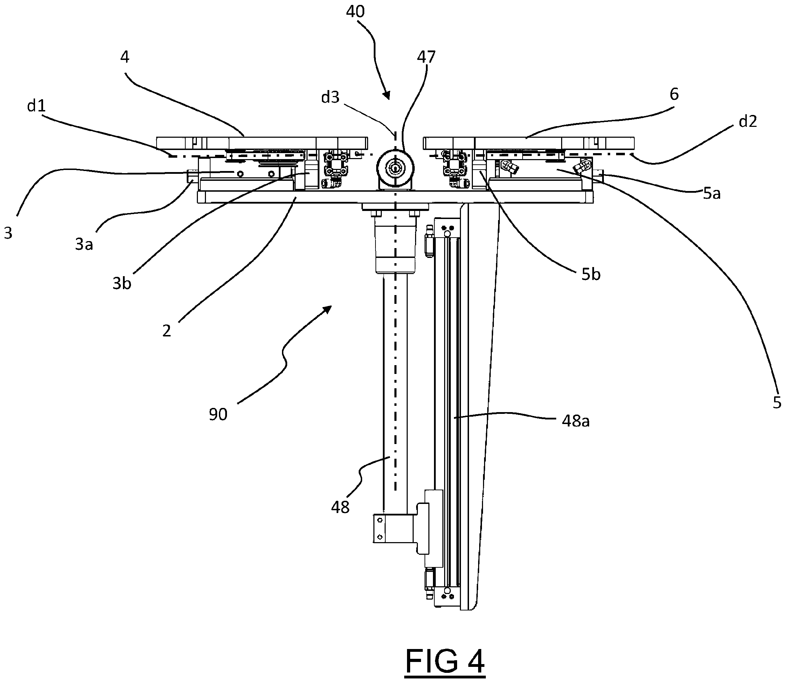

A first movement device 3 (figure 4) comprises a first support carriage 4 movable in a first sliding direction d1. The first support carriage 4 is slidably mounted on the fixed support 2. The first movement device 3 comprises one or more movement guides 3a placed between the fixed support 2 and the first support carriage 4 to guide the movement of the first support carriage 4 in the first sliding direction d1 (indicated in figures 3 and 4). The first movement device 3 further comprises an actuator 3b, preferably a pneumatic cylinder, configured to actuate the movement of the first support carriage 4.

A second movement device 5 (figure 4) comprises a second support carriage 6 movable in a second sliding direction d2 (figures 3 and 4). The second sliding direction d2 is parallel to the first sliding direction d1. The second support carriage 6 is slidably mounted on the fixed support 2. The first support carriage 4 and the second support carriage 6 are movable towards and away from each other.

The second movement device 5 comprises one or more movement guides 5a placed between the fixed support 2 and the second support carriage 6 to guide the movement of the second support carriage 6 in the second sliding direction d2. The movement guides 5a of the second movement device 5 are parallel to the movement guides 5a of the first movement device 3. The second movement device 5 further comprises an actuator 5b, preferably a pneumatic cylinder, configured to actuate the movement of the second support carriage 6.

The first movement device 3 is configured to move the first support carriage 4 with respect to the fixed support 2 selectively towards the second support carriage 6 and away from the second support carriage 6. Similarly, the second movement device 5 is configured to move the second support carriage 6 with respect to the fixed support 2 selectively towards the first support carriage 4 and away from the first support carriage 4.

The apparatus 1 is configured to receive a first piece of electrode web s1 of the first electrode web f1 unwound from the first coil of electrode web 83 and a second piece of electrode web s2 of the second electrode web f2 unwound from the second coil of electrode web 84.

Externally to the apparatus 1, a first directing roller 11 is positioned between the first coil of electrode web 83 and the apparatus 1, in particular the inlet portion 85 of the apparatus 1 (figures 7-9). The first directing roller 11 is configured to deviate the first electrode web f1 and direct the first piece of electrode web s1 along a first advancement path p1. The first advancement path p1 passes between the first support carriage 4 and the second support carriage 6. The first advancement path p1 is perpendicular to the first sliding direction d1.

Externally to the apparatus 1, a second directing roller 12 is positioned between the second coil of electrode web 84 and the inlet portion 85 of the apparatus 1. The second directing roller 12 is configured to deviate the second electrode web f2 and direct the second piece of electrode web s2 along a second advancement path p2. The second advancement path p2 passes between the first support carriage 4 and the second support carriage 6. The second advancement path p2 is perpendicular to the second sliding direction d2.

In embodiments not illustrated in the figures, further directing rollers may be provided externally to the apparatus 1.

In other embodiments not illustrated in the figures, instead of or in addition to the rollers 11, 12, a first directing roller may be mounted on the fixed support 2 or on the first support carriage 4, at the inlet portion 85, and a second directing roller may be mounted on the fixed support 2 or on the second support carriage 6, at the inlet portion 85.

The apparatus 1 comprises a winder of second electrode web 16. The winder of second electrode web 16 is mounted on the second support carriage 6. When the first electrode web f1 is fed to the forming station, the winder of second electrode web 16 is configured to receive an end of the second piece of electrode web s2 distal from the second coil of electrode web 84. The winder of second electrode web 16 is rotatably actuatable to provide the second piece of electrode web s2 along the second advancement path p2, preferably while the first electrode web f1 is fed to the forming station. The end of the second piece of electrode web s2 is manually applicable on the winder of second electrode web 16.

In embodiments, for the purpose of interchangeability in the use of the electrode web f1 in use or the new electrode web f2 at the first or second carriage 4, 6, the apparatus 1 may comprise a winder of first electrode web 15 mounted on the first support carriage 4 and configured to receive a longitudinal end of the piece of electrode web unwound from a coil of electrode web 83, 84. The winder of first electrode web 15 is rotatably actuatable and arranged distal from the first coil of electrode web 83.

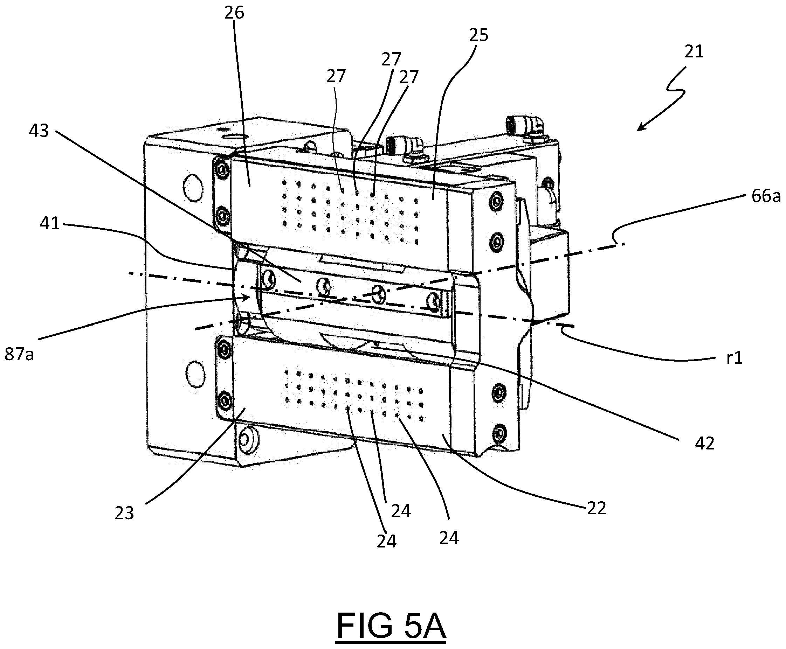

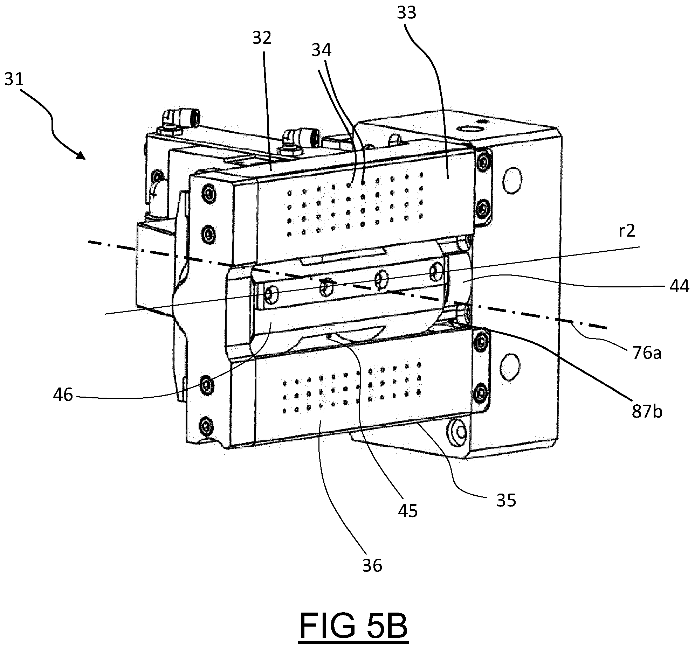

The apparatus 1 comprises a first retaining device 21, depicted in greater detail in figure 5, configured to retain the first piece of electrode web s1. The first retaining device 21 is movable by the first movement device 3 along the first sliding direction d1. The first retaining device 21 faces the first advancement path p1. The first retaining device 21 is fixed to the first support carriage 4.

The first retaining device 21 comprises a first retaining element 22 (figures 5A, 6, 8 and 9), for example formed by a plate. The first retaining element 22 is proximal to the inlet portion 85 of the support 2 and distal to the outlet portion 86 with respect to the first advancement path p1. The first retaining element 22 comprises a first suction surface 23 configured to retain an object by suction (figure 5A). The first suction surface 23 is flat. The first suction surface 23 comprises a plurality of suction holes 24 placed in fluid communication with a suction member (not illustrated). The first suction surface 23 is parallel to the first advancement path p1. The first suction surface 23 is orthogonal to the first sliding direction d1.

The first retaining device 21 comprises a second retaining element 25, for example formed by a plate. The second retaining element 25 is placed downstream of the first retaining element 22 with respect to the first advancement path p1. The second retaining element 25 comprises a second suction surface 26. The second suction surface 26 is flat. The second suction surface 26 comprises a plurality of suction holes 27 placed in fluid communication with a suction member (not illustrated), preferably in common with the first suction surface 23. The second suction surface 26 is aligned with the first suction surface 23 with respect to a direction perpendicular to the first advancement path p1. The second suction surface 26 is parallel to the first advancement path p1, at least in the portion of the path at the first retaining device. The first suction surface 23 is orthogonal to the first sliding direction d1.

The first and second suction surfaces 23, 26 of the first retaining device 21 are powered separately such that they can activate or deactivate suction independently of each other. For example, the first and second suction surfaces 23, 26 are connected to a suction member by means of two separate connection ducts on which a respective suction valve is arranged (elements not illustrated in the figures). The suction valves are configured to be actuated in a closed or open position independently of each other.

The first suction surface 23 and the second suction surface 26 are coplanar.

Once the cutting is finished, the suction on the second retaining element 22 is maintained, while on the first retaining element 25 it is deactivated to allow the first electrode web f1 to separate from the working coil 83 (in use).

In embodiments, the first and second retaining elements 22, 25 of the first retaining device 21 are distanced from each other along a direction parallel to the first advancement path p1, forming an opening 87a (figure 5A) between the retaining surfaces 23, 26 in the plane defined by the retaining surfaces.

The first retaining device 21 is mounted on the first support carriage 4 at an end portion of the first carriage that intercepts the sliding direction d1. In particular, the retaining surfaces 23, 26 are placed at an end of the first carriage.

In a particular embodiment, the retaining surfaces 23, 26 of the first and second retaining elements 22, 25 of the first retaining device 21 have the same size and shape.

The apparatus 1 comprises a second retaining device 31 configured to retain the second piece of electrode web s2 of the second electrode web f2. The second retaining device 31 is movable by the second movement device 5 along the second sliding direction d2.

The second retaining device 31 is fixed to the second support carriage 6. The second retaining device 31 faces the second advancement path p2. The second retaining device 31 faces the first retaining device 31.

The second retaining device 31 is mounted on the second support carriage 6 at an end portion of the first carriage that intercepts the sliding direction d2. In particular, the retaining surfaces 33, 36 are placed at an end of the second carriage.

The second retaining device 31 comprises a first retaining element 32. The first retaining element 32 is proximal to the inlet portion 85 and distal to the outlet portion 86 of the support 2 with respect to the first advancement path p2. The first retaining element 32 comprises a first suction surface 33, configured to retain an object by suction (figure 5B). The first suction surface 33 is flat. The first suction surface 33 is parallel to the second advancement path p2, at least in the portion of the path at the second retaining device. The first suction surface 33 of the second retaining device 31 is parallel to the first suction surface 23 of the first retaining device 21. The first suction surface 33 comprises a plurality of suction holes 34 placed in fluid communication with a suction member (not illustrated). The suction member is external to the apparatus 1.

The first suction surface 33 is perpendicular to the second sliding direction d2.

The second retaining device 31 comprises a second retaining element 35. The second retaining element 35 is placed downstream of the first retaining element 32 with respect to the second advancement path p2. The second retaining element 35 of the second retaining device 31 faces the second retaining element 25 of the first retaining device 21. The second retaining element 35 comprises a second suction surface 36. The second suction surface 36 is flat. The second suction surface 36 of the second retaining device 31 is parallel to the second suction surface 26 of the first retaining device 21. The second suction surface 36 comprises a plurality of suction holes 37. The holes of the second suction surface 36 are placed in fluid communication with a suction member (not illustrated), which can also be connected with the suction holes 34 of the first suction surface 33. The second suction surface 36 is aligned with the first suction surface 33 along a direction perpendicular to the second advancement path p2. The second suction surface 36 is parallel to the second advancement path p2, at least in the portion of the path at the second retaining device. The second suction surface 36 is orthogonal to the second sliding direction d2.

The first suction surface 33 and the second suction surface 36 are coplanar.

The first and second suction surfaces 33, 36 of the second retaining device 31 are powered separately such that they can activate or deactivate suction independently of each other. For example, the first and second suction surfaces 33, 36 are connected to a suction member by means of two separate connection ducts on which respective valves are arranged (elements not illustrated in the figures). The valves are configured to be actuated in a closing or opening position independently of each other.

The suction member may be common to the first and second retaining devices 21, 31, the suction activation and deactivation by the retaining elements 22, 25, 32 and 35 being actuated by controlling the opening and closing state of the respective valves.

In a particular embodiment, the retaining surfaces 33, 36 of the first and second retaining elements 32, 35 of the second retaining device 31 have the same size and shape.

In embodiments, the first and second retaining elements 32, 35 of the second retaining device 31 are distanced from each other along a direction parallel to the second advancement path p2, forming an opening 87b (figure 5B) between the retaining surfaces 33, 36 in the plane defined by the retaining surfaces.

The areas of the suction surfaces 23, 26 of the first and second elements 22, 25 of the first retaining device 21 are preferably the same.

The areas of the suction surfaces 33, 36 of the first and second elements 32, 35 of the second retaining device 31 are preferably the same.

At the first and second retaining devices 21, 31, the first and second advancement paths p1 and p2 are straight, the second advancement path p2 being parallel to the first advancement path p1.

The first movement device 3 and the second movement device 5 are both movable between a distanced position and an approached position.

In the approached position of the first movement device 3 and of the second movement device 5, the first retaining device 21 and the second retaining device 31 are positioned with respect to each other to bring the first piece of web into alignment with the second piece of web, on a common lying plane g. The lying plane g is parallel to the planes defining the suction surfaces of the first and second retaining devices (typically parallel to the advancement paths p1 and p2, at least in the part of the path at the retaining devices).

In the approached position, the first and second retaining devices are substantially in contact with each other, e.g. they are separated at most by a distance from 1 to 4 mm, e.g. 2 mm.

In the distanced position of the first movement device 3 and of the second movement device 5, the first retaining device 21 and the second retaining device 31 are spaced apart from each other. By spaced apart from each other it is meant that the first retaining device 21 and the second retaining device 31 are separated by a distance of not less than 50 mm.

The apparatus 1 further comprises a cutting mechanism 40.

The cutting mechanism 40 comprises a first rotating body 41 (figure 5A). The first rotating body 41 is rotatably mounted on the first retaining device 21 around a rotation axis r1. The rotation axis r1 is perpendicular to the first sliding direction d1. The rotation axis r1 is also perpendicular to the first advancement path p1. The first rotating body 41 is rotatable about the rotation axis r1 between a cutting abutment position and a non-operating position, described in detail below. The cutting abutment position and the non-operating position are angularly distanced by 90°. The first rotating body 41 also has a passage opening 42, extended radially with respect to the rotation axis r1. The passage opening 42 has a rectangular section in a plane parallel to the rotation axis r1. In the non-operating position the passage opening 42 is oriented parallel to the sliding direction d1 of the first support carriage 4. In the non-operating position the passage opening 42 is open at the first retaining device 21.

The cutting mechanism 40 comprises a first counter-blade 43 (figures 5A, 6 and 7). The first counter-blade 43 has a development direction perpendicular to the first advancement path p1. The first counter-blade 43 is movable along the first sliding direction d1 together with the first retaining device 21. In figure 5A the first rotating body 41 is illustrated in the cutting abutment position, in which the first counter-blade 43 faces outwards with respect to the opening 87a.

The first counter-blade 43 is mounted on the first rotating body 41. The first counter-blade 43 is oriented parallel to the rotation axis r1. The first counter-blade 43 is fixed to the first rotating body 41 and is movable integrally therewith about the rotation axis r1. In the cutting abutment position of the first rotating body 41, the first counter-blade 43 is placed at the first retaining device 21. In the cutting abutment position, the first counter-blade 43 is placed between the first retaining element 22 and the second retaining element 25.

In the cutting abutment position of the first rotating body 41, the first counter-blade 43 is parallel to the first suction surface 23 and to the second suction surface 26, preferably coplanar therewith.

In the non-operating position of the first rotating body 41, the first counter-blade 43 is spaced apart from the first retaining element 22 and from the second retaining element 25 and does not engage the passage opening 42. In particular, in said position, the first counter-blade 43 is not coplanar to the first suction surface 23 and to the second suction surface 26.

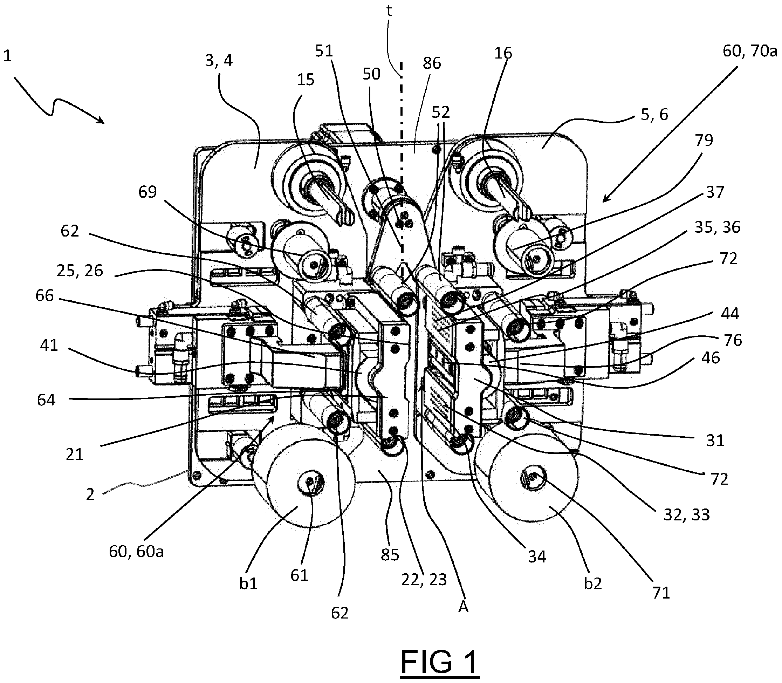

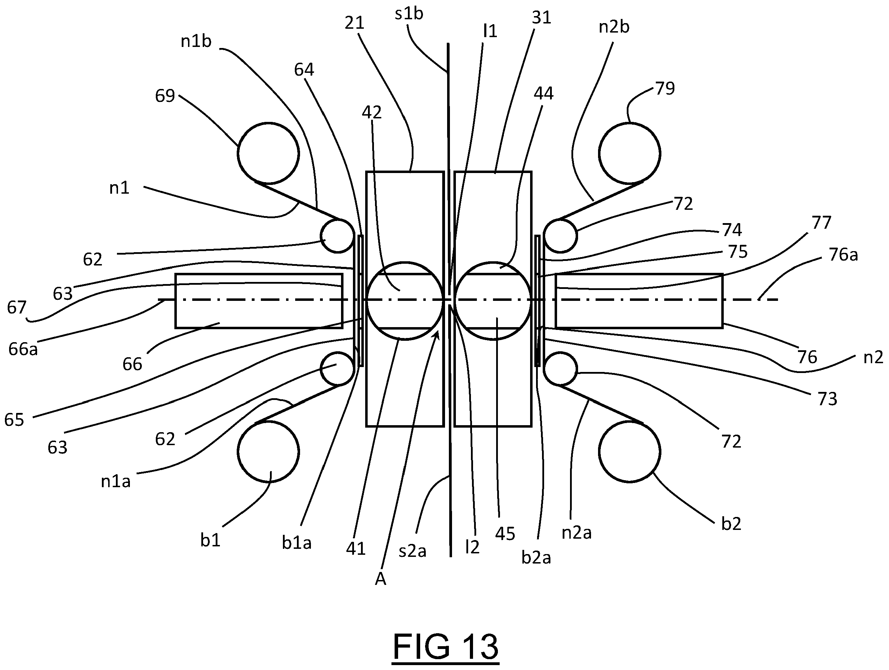

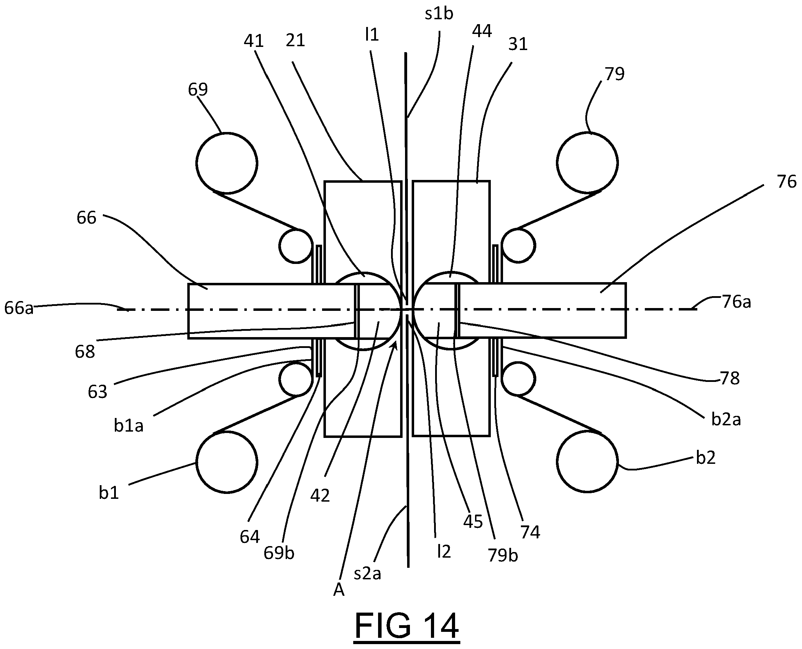

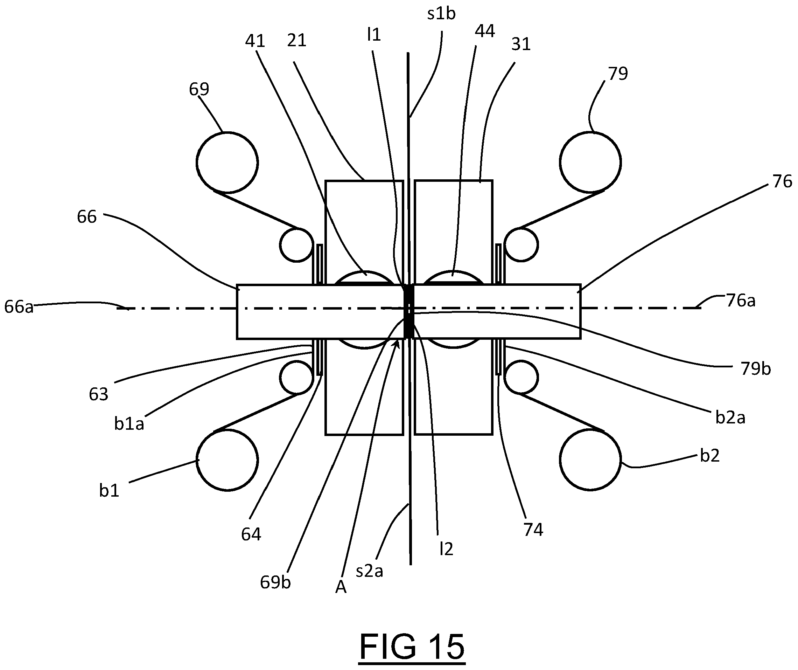

The cutting mechanism 40 comprises a second rotating body 44 (figures 1, 5B, 12-15). The second rotating body 44 is rotatably mounted on the second retaining device 31 about a rotation axis r2. The rotation axis r2 is perpendicular to the second sliding direction d2 of the second carriage 6. The rotation axis r2 is also perpendicular to the second advancement path p2. The second rotating body 44 is rotatable about the rotation axis r2 between a cutting abutment position and a non-operating position, described in detail below. The cutting abutment position and the non-operating position are angularly distanced by 90°. The second rotating body 44 also has a passage opening 45, extended radially with respect to the rotation axis r2. The passage opening 45 has a rectangular section in a plane parallel to the rotation axis r2. In the non-operating position the passage opening 45 is oriented parallel to the sliding direction d2. In the non-operating position the passage opening 45 is open at the second retaining device 31. In figure 5B the second rotating body 44 is illustrated in the cutting abutment position, in which the second counter-blade 46 faces outwards.

The cutting mechanism 40 comprises a second counter-blade 46 (Fig. 5B). The second counter-blade 46 is movable along the second sliding direction d2 together with the second retaining device 31. The second counter-blade 46 has a development direction perpendicular to the first advancement path p1.

The second counter-blade 46 is mounted on the second rotating body 44. The second counter-blade 46 is oriented parallel to the rotation axis r2. The second counter-blade 46 is fixed to the second rotating body 44 and is movable integrally therewith about the rotation axis r1. In the cutting abutment position of the second rotating body 44, the second counter-blade 46 is placed at the second retaining device 31. In the cutting abutment position, the second counter-blade 46 is placed between the first retaining element 32 and the second retaining element 35. In the cutting abutment position, the second counter-blade 46 is parallel to the first suction surface 33 and to the second suction surface 36, preferably coplanar therewith. In the non-operating position of the second rotating body 44, the second counter-blade 46 is spaced apart from the first retaining element 32 and from the second retaining element 35 and is not coplanar with the first suction surface 33 and with the second suction surface 36.

In figure 5B the first rotating body 44 is illustrated in the cutting abutment position, in which the second counter-blade 46 is turned outwards with respect to the opening 87b.

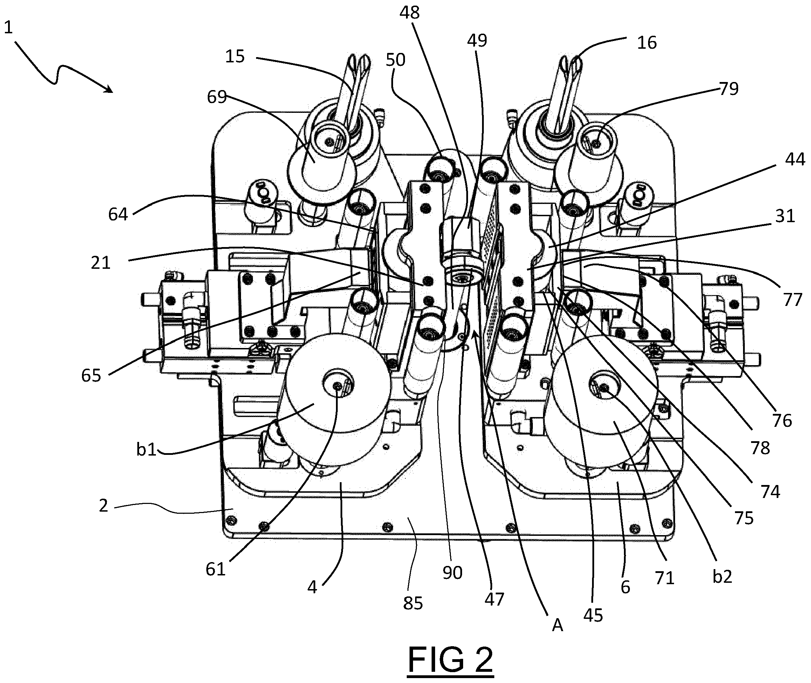

The cutting mechanism 40 comprises a cutting device 90 configured to selectively cut the first piece of electrode web s1 retained by the first retaining device 21 and the second piece of electrode web s2 retained by the second retaining device 31. The cutting device 90 comprises a blade 47 (figures 2, 4, 7-10). The blade 47 has a circular shape. The cutting device 90 comprises an actuation arm 48 operatively connected to the blade 47 and configured to move the blade 47 along a cutting direction d3 (figure 4). The actuation arm 48 is slidably mounted on the fixed support 2 between the first movement device 3 and the second movement device 5. An actuator 48a is configured to move the arm 48 with respect to the fixed support 2 (figure 4) along the cutting direction d3. The blade 47 is rotatable about an axis parallel to the first advancement path p1 and the second advancement path p2.

The cutting direction d3 is perpendicular to the first sliding direction d1 and to the second sliding direction d2. The cutting direction d3 is perpendicular to the first advancement path p1 and to the second advancement path p2. The cutting direction d3 is parallel to the first counter-blade 43 and to the second counter-blade 46. The cutting direction d3 is parallel to the rotation axes r1, r2 of the first rotating body 41 and of the second rotating body 44. The blade 47 is rotatable about an axis perpendicular to the cutting direction d3.

The cutting device 90 comprises an actuation roller 49 concentric to the blade 47 (figures 2 and 4). The blade 47 is mounted rotationally fixed with the actuation roller 49. In one embodiment, the blade 47 and the actuation roller 49 are mounted idly on the arm 48.

The actuation roller 49 is configured to roll against the first counter-blade 43 when the first retaining device 21, which retains the first piece s1, is arranged in the cutting position. In particular, the actuation roller 49 slides grazing the first counter-blade 43 bringing into rotation the blade 47 that performs the cutting of the piece s1. Similarly, when the second retaining device 31 is arranged in the cutting position, which preferably coincides with the cutting position of the first retaining device 21, the actuation roller 49 slides grazing the second counter-blade 46 causing the blade 47 to rotate.

In a further embodiment, the actuation roller 49 is motorized to impart rotation to the blade 27.

The cutting device 90 is positionable in a rest position in which the blade 47 is not placed between the first retaining device 21 and the second retaining device 31. The cutting device 90 is configured to perform a cutting stroke between the rest position and a plurality of active positions. During the cutting stroke the blade 47 is moved along the cutting direction d3 by the actuation arm 48 (figure 4). In the plurality of active positions the blade 47 is interposed between the first retaining device 21 and the second retaining device 31. The cutting device 90 is further configured to perform a reset stroke in which the blade 47 returns to the rest position, in which the reset stroke is opposite to the cutting direction.

The first movement device 3 is configured to arrange the first retaining device 21 in a cutting position intermediate between the distanced position and the approached position. In the cutting position of the first retaining device 21 the blade 47 of the cutting device 90, during the cutting stroke, is configured to cut the first piece of electrode web s1 retained by the first retaining device 21 by sliding against the first counter-blade 43. The cut first piece of electrode web s1 is divided into a first portion s1a, in continuity with the first coil of electrode web 83, and a second portion s1b, separated from the first coil of electrode web 83. The first retaining element 22 of the first retaining device 21 is configured to retain the first portion s1a. The second retaining element 25 of the first retaining device 21 is configured to retain the second portion s1b. A first free end 11, transverse and preferably perpendicular to the first advancement path p1, is defined on the second portion s1b.

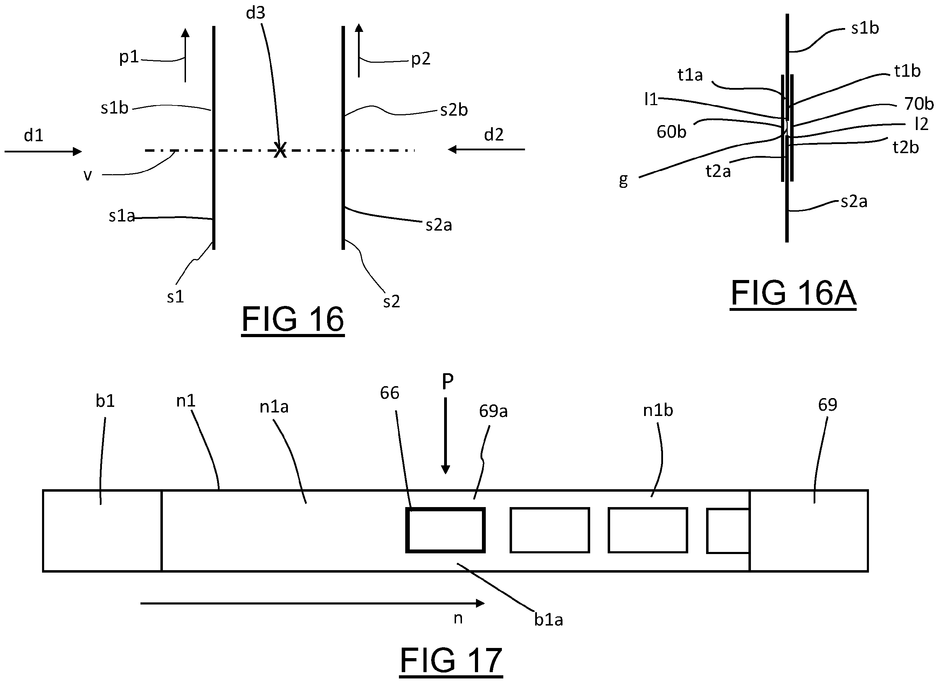

A first surface portion t1a is defined on the second portion s1b of the first piece s1, adjacent to the first free end 11, and extends transversely between the longitudinal edges in the first electrode web f1 (figure 16A). A second surface portion t1b is defined on the second portion s1b, adjacent to the first free end 11, and extends transversely between the longitudinal edges in the first electrode web f1 on the opposite side to the first surface portion t1a. Both the first surface portion t1a and the second surface portion t1b extend longitudinally and transversely on the first electrode web f1.

The second movement device 5 is configured to arrange the second retaining device 31 in a cutting position intermediate between the distanced position and the approached position. The cutting position of the second retaining device 31 is alternative to the cutting position of the first retaining device 21. In the cutting position of the second retaining device 31 the blade 47, during the cutting stroke, is configured to cut the second piece of electrode web s2 retained by the second retaining device 31 by sliding against the second counter-blade 46. The cut second piece of electrode web s2 is divided into a first portion s2a, in continuity with the second coil of electrode web 84, and a second portion s2b, separated from the second coil of electrode web 84. The first retaining element 32 of the second retaining device 31 is configured to retain the first portion s2a. The second retaining element 35 of the second retaining device 31 is configured to retain the second portion s2b. A second free end l2, transverse and preferably perpendicular to the second advancement path p2, is defined on the first portion s2a.

A first surface portion t2a is defined on the first portion s2a, adjacent to the second free end l2, and extends transversely between the longitudinal edges in the second electrode web f2. A second surface portion t2b is defined on the first portion s2a, adjacent to the second free end l2, and extends transversely between the longitudinal edges in the second electrode web f2 on the opposite side to the first surface portion t2a. Both the first surface portion t2a and the second surface portion t2b extend longitudinally and transversely on the first electrode web f2.

The apparatus 1 comprises an electrode web deflector 50. The deflector 50 is mounted on the fixed support 2. The deflector 50 is mounted at the outlet portion 86 of the fixed support 2, in an area thereof that does not engage the first and second support carriages 4, 6 in any of the positions used by the movement devices 3, 5.

The deflector 50 comprises a fork 51 having an axis of symmetry t (indicated in figure 1). The deflector 50 comprises a pair of deflector rollers 52 mounted parallel to each other on the fork 51, at respective ends thereof opposite with respect to the axis of symmetry.

The deflector 50 is movable between a rest position, a first web interception position and a second web interception position. In the rest position the fork 51 is arranged with the respective axis of symmetry t parallel to the first advancement path p1 and to the second advancement path p2. In the rest position, illustrated in figures 1 and 2, the deflector rollers 52 engage neither the first piece of electrode web s1 nor the second piece of electrode web s2.

In the first interception position, the deflector 50 is configured to engage the first piece of electrode web s1 and bring it closer to the first retaining device 21. In particular, the fork 51 is rotated with respect to the rest position and is arranged with the respective axis of symmetry t inclined with respect to the first advancement path p1 and to the second advancement path p2 (indicated in figure 7). In the first interception position, one of the deflector rollers 52 is configured to press the first piece of electrode web s1 against the first retaining device 21. In this way, the cutting device 90 can cut the second piece of electrode web s2 without risking engaging the first piece of electrode web s1.

In the second interception position (indicated in figure 3), the deflector 50 is configured to engage the second piece of electrode web s2 and bring it closer to the second retaining device 23. In particular, the fork 51 is rotated with respect to the rest position and is arranged with the respective axis of symmetry t inclined with respect to the first advancement path p1 and to the second advancement path p2 on the opposite side with respect to the first interception position. In the second interception position, the other of the deflector rollers 52 is configured to press the second piece of electrode web s2 against the second retaining device 31. In this way, the cutting device 40 can cut the first piece of electrode web s1 without risking engaging the second piece of electrode web s2.

The apparatus 1 further comprises a joining device 60, configured to join the first free end l1 to the second free end l2. In this way, the first portion s1a of the first piece of electrode web s1 is joined to the second portion s2b of the second piece of electrode web s2. The joining device 60 is active on a junction area A (figures 1, 4 and 7). The first retaining device 21 is configured to retain the first free end l1 at the junction area A during junction. The second retaining device is configured to retain the second free end l2 at the junction area A, the second free end being positioned at the first free end 11, during junction.

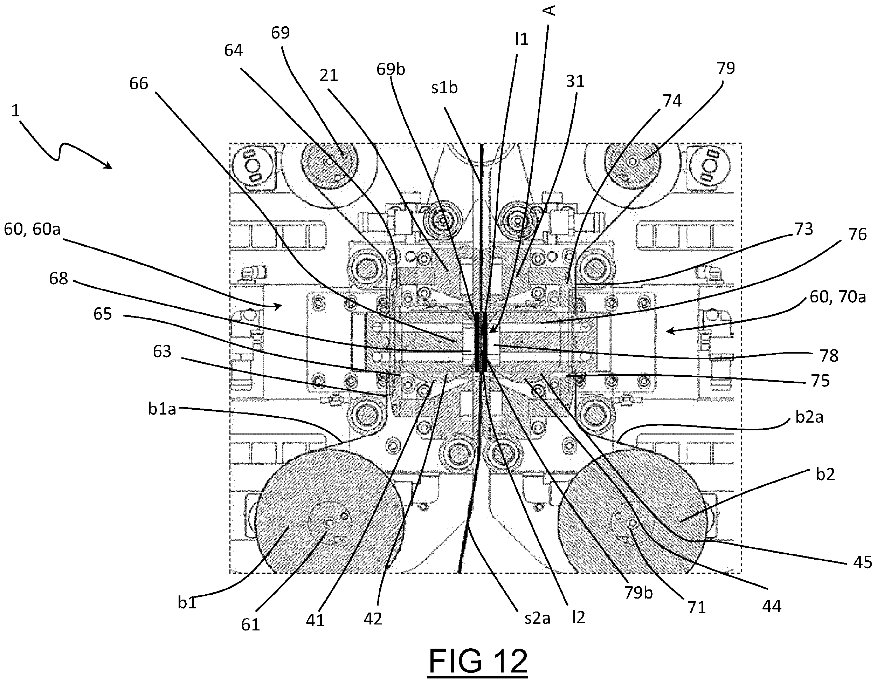

The joining device 60 comprises a first applicator 60a (indicated in figures 1 and 12). The first applicator 60a is mounted on the first support carriage 4. The first applicator 60a is configured to cooperate with the first retaining device 21.

The first applicator 60a is configured to apply a first connection element 60b at the first free end l1 and the second free end l2, and in particular on the first surface portion t1a of the second portion s1b of the first piece of electrode web s1 and on the first surface portion t2a of the first portion s2a of the second piece of electrode web s2. In the illustrated embodiment, the first connection element 60b is an adhesive element and, in particular, a first adhesive patch 69b.

With reference to figures 12-15, the first applicator 60a comprises a first adhesive tape coil support 61 configured to support a first adhesive tape feeding coil b1 and unwind a first adhesive tape n1 from the first feeding coil b1 to provide an unwound first piece of adhesive tape b1a. The first adhesive tape coil support 61 is mounted on the first support carriage 4, preferably rotatably.

The first applicator 60a comprises first guide rollers 62 (indicated in figures 1, 6 and 13) configured to guide the unwinding of the first piece of adhesive tape b1a from the first feeding coil b1 along a first web unwinding path 63 (figures 12-15). The first web unwinding path 63 has a section parallel to the first advancement path p1 of the first piece of electrode web s1. The first unwinding path 63 is opposite to the first advancement path p1 with respect to the first retaining device 21. Along the first unwinding path 63, the first piece of adhesive tape b1a has an adhesive side facing the first retaining device 21.

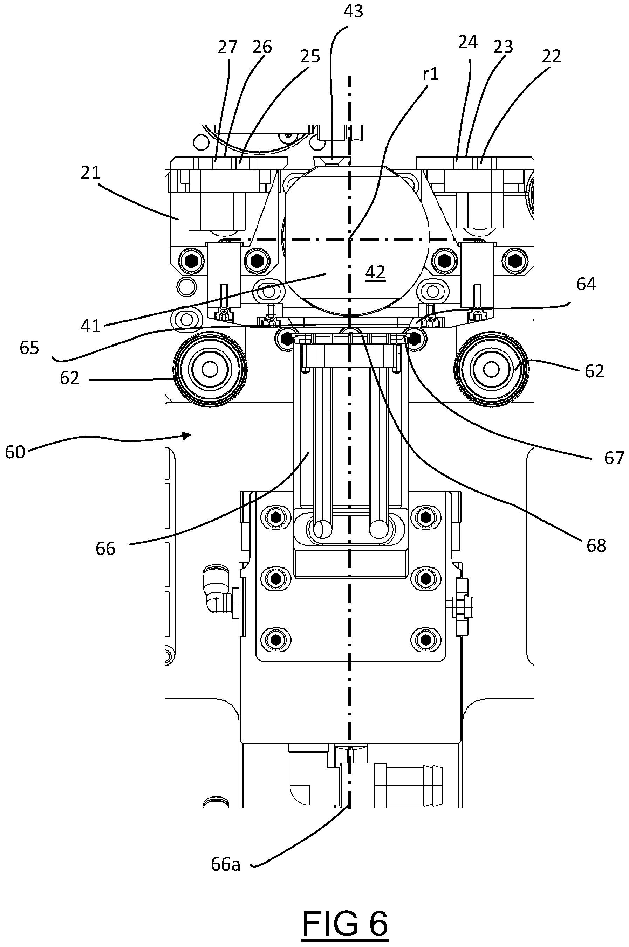

The first applicator 60a comprises a first punching base 64. The first punching base 64 has a punching surface parallel to the first web unwinding path 63. The first punching base 64 is fixed to the first support carriage 4. The first punching base 64 has a punching opening 65. In the non-operating position of the first rotating body 41, the passage opening 42 of the first rotating body 41 is aligned with the punching opening 65 and is accessible from the punching opening 65 (figure 6). Preferably, the punching opening 65 has substantially the same shape and sectional dimensions with respect to the passage opening 42 of the first rotating body 41.

The first applicator 60a comprises a first punch 66. The first punch 66 is movably mounted on the first support carriage 4. The first punch 66 is movable along a first punching direction 66a transverse to the first unwinding path 63. The first punching direction 66a is perpendicular to the first advancement path p1. The first punching direction 66a is parallel to the first sliding direction d1 of the first support carriage 4.

The first punch 66 comprises a perimeter cutting edge 67. The cutting perimeter edge 67 is rectangular. The perimeter cutting edge 67 is substantially counter-shaped to the punching opening 65 so as to be able to cross it flush, for example with a margin not higher than 0.04 mm with respect to the sides of the punching opening 65. The first punch 66 is also substantially counter-shaped to the passage opening 42 so as to be able to cross it flush. The first punch 66 is configured to cut the first piece of adhesive tape b1a between the cutting perimeter edge 67 and an edge of the punching opening 65.

The first punch 66 comprises a suction surface 68 (indicated in figures 6, 12 and 14) configured to vacuum suck a first adhesive patch 69b cut away from the first piece of adhesive tape b1a to retain it. The suction surface 68 of the first punch 66 comprises a plurality of suction holes in fluid communication with a suction member (not shown). The suction surface 68 of the first punch 66 is circumscribed by the perimeter cutting edge 67.

The first punch 66 is movable between a rest configuration and an application configuration.

In the rest configuration the first punch 66 does not engage the first web unwinding path 63.

In the application configuration, the first punch 66 is configured to apply the first cut adhesive patch 69b to the first free end l1 and to the second free end l2, retained by the first retaining device 21 and by the second retaining device 31, placed in the approached position, at the junction area A.

Between the rest configuration and the application configuration, the first punch 66 is movable into a punching position in which, preferably without stopping, the first punch 66 engages the first unwinding path 63 to cut away an inner portion from the unwound first piece of adhesive tape b1a, thereby separating the inner portion from a residual edge portion 69a extending along the first web unwinding path 63.

The first punch 66 is configured to cut the first piece of adhesive tape b1a while maintaining a first part n1a of the first adhesive tape n1 upstream in connection with a second part n1b of the first adhesive tape n1 downstream. In other words, the first punch 66 is configured to cut away the inner portion without completely cutting off the first piece of adhesive tape b1a. The first punch 66 has a width measured transversely to the first unwinding path 63 smaller than the width of the first piece of adhesive tape b1a. The inner portion cut away by the first punch 66 forms the first adhesive patch 69b (figures 12, 14, 15).

The first punch 66 is movable between the rest configuration and the application configuration through the punching opening 65 and the passage opening 42 of the first rotating body 41 in the non-operating position. The first punch 66 is configured to retain the first adhesive patch 69b between the punching position and the application configuration.

The first applicator 60a comprises a first winder 69. The first winder 69 is rotatably mounted on the first support carriage 4. The first winder 69 is configured to wind the residual edge portion 69a of the first adhesive tape n1 downstream of the first unwinding path 63. The first winder 69 is configured to tension the first piece of adhesive tape b1a between the first feeding coil b1 and the first winder 69 so as to stretch it on the first punching base 64 during punching. The residual portion 69a that is wound on the first winder 69 consists at least in part of punching scraps of the first piece of adhesive tape b1a, i.e. the residual edge portions 69a of the first adhesive tape n1.

In figure 17, it is schematically represented the path of the first adhesive tape n1, but it can be the representation of the path of the second adhesive tape n2. From left to right of the figure, in the direction n of the path of the first adhesive tape n1, the first piece of adhesive tape b1a is unwound from the first feeding coil b1 and is intercepted by the first punch 66 (position P) that cuts away the first adhesive patch 69b leaving a residual portion 69a in the shape of a frame that allows a continuity in unwinding the web between before and after punching. Subsequent to punching 66, the web formed by the residual edge portions 69a is wound to the first winder 69.

The joining device 60 comprises a second applicator 70a. The second applicator 70a is mounted on the second support carriage 6. The second applicator 70a is configured to cooperate with the second retaining device 31.

The second applicator 70a is configured to apply a second connection element 70b at the first free end l1 and the second free end l2, and in particular on the second surface portion t1 b of the second portion s1b of the first piece of electrode web s1 and on the second surface portion t2b of the first portion s2a of the second piece of electrode web s2. In the illustrated embodiment, the second connection element 70b is an adhesive element and, in particular, the second adhesive patch 79b.

The second applicator 70a comprises a second adhesive tape coil support 71 configured to support a second adhesive tape feeding coil b2 and unwind a second adhesive tape n2 from the second feeding coil b2 to provide an unwound second piece of adhesive tape b2a. The second adhesive tape coil support 71 is mounted on the second support carriage 6, preferably rotatably.

The second applicator 70a comprises second guide rollers 72 configured to guide the unwinding of the second piece of adhesive tape b2a from the second feeding coil b2 along a second web unwinding path 73. The second web unwinding path 73 has a section parallel to the second advancement path p2 of the second piece of electrode web s2. The second web unwinding path 73 is opposite to the second advancement path p2 with respect to the second retaining device 31. Along the second web unwinding path 73, the second piece of adhesive tape b2a has an adhesive side facing the second retaining device 31.

The second applicator 70a comprises a second punching base 74. The second punching base 74 has a punching surface parallel to the second web unwinding path 73. The second punching base 74 is fixed to the second support carriage 6. The second punching base 74 has a punching opening 75. In the non-operating position of the second rotating body 44, the passage opening 45 of the second rotating body 44 is aligned with the punching opening 75 and is accessible from the punching opening 75. Preferably, the punching opening 75 has substantially the same shape and sectional dimensions with respect to the passage opening 45 of the first rotating body 44.

The second applicator 70a comprises a second punch 76. The second punch 76 is movably mounted on the second support carriage 6. The second punch 76 is movable along a second punching direction 76a transverse and preferably perpendicular to the second web unwinding path 73. The second punching direction 76a is perpendicular to the second advancement path p2. The second punching direction 76a is parallel to the second sliding direction d2 of the second support carriage 6.

The second punch 76 comprises a perimeter cutting edge 77. The cutting perimeter edge 77 is rectangular. The perimeter cutting edge 77 is substantially counter-shaped to the punching opening 75 so as to be able to cross it flush. The second punch 76 is also substantially counter-shaped to the passage opening 45 so as to be able to cross it flush. The second punch 76 is configured to cut the second piece of adhesive tape b2a between the cutting perimeter edge 77 and an edge of the punching opening 75.

The second punch 76 comprises a suction surface 78 configured to vacuum suck a second adhesive patch 79b cut away from the second piece of adhesive tape b2a to retain it. The suction surface 78 of the second punch 76 comprises a plurality of suction holes in fluid communication with a suction member (not shown). The suction surface 78 of the second punch 76 is circumscribed by the perimeter cutting edge 77.

The second punch 76 is movable between a rest configuration and an application configuration.

In the rest configuration the second punch 76 does not engage the second web unwinding path 73.

Between the rest configuration and the application configuration, the second punch 76 is arranged, preferably without stopping, in a punching position in which the second punch 76 engages the second web unwinding path 73 to cut away an inner portion of adhesive tape from the unwound second piece of adhesive tape b2a, thereby separating the inner portion from a residual edge portion (not illustrated), which extends along the second web unwinding path 73. The residual edge portion of the second adhesive tape n2 is similar to the residual edge portion 69a of the first adhesive tape n1. The second punch 76 is configured to cut the second piece of adhesive tape b2a while maintaining a first part n2a of the second adhesive tape n2 upstream in connection with a second portion n2b of the second adhesive tape n2 downstream. In other words, the second punch 76 is configured to cut away the inner portion without completely cutting off the second piece of adhesive tape b2a. The second punch 76 has a width measured transversely to the second web unwinding path 73 smaller than the width of the second piece of adhesive tape b2a. The inner portion cut away by the second punch 76 forms the second adhesive patch 79b (figures 12, 14, 15).

In the application configuration, the second punch 76 is configured to apply the second cut adhesive patch 79b to the first free end l1 and to the free end l2, retained by the first retaining device 21 and by the second retaining device 31, placed in the approached position, at a junction area A. Preferably, the second punch 76 is configured to apply the second adhesive patch 79b simultaneously with the application of the first adhesive patch 69b by the first punch 66, at opposite sides of the first piece of electrode web s1 and of the second piece of electrode web s2.

The second punch 76 is movable between the punching position and the joining configuration through the punching opening 75 and the passage opening 45 of the second rotating body 44 in the non-operating position. The second punch 76 is configured to retain the second adhesive patch 79b between the punching position and the application configuration.

The second applicator 70a comprises a second winder 79. The second winder 79 is rotatably mounted on the second support carriage 6. The second winder 79 is configured to wind the residual edge portion of the second adhesive tape n2 downstream of the second web unwinding path 73. The second winder 79 is configured to tension the second adhesive tape n2 between the second feeding coil b2 and the second winder 79 so as to stretch it on the second punching base 74 during punching. The residual portion that is wound on the second winder 79 consists at least in part of punching scraps of the second piece of adhesive tape b2a.

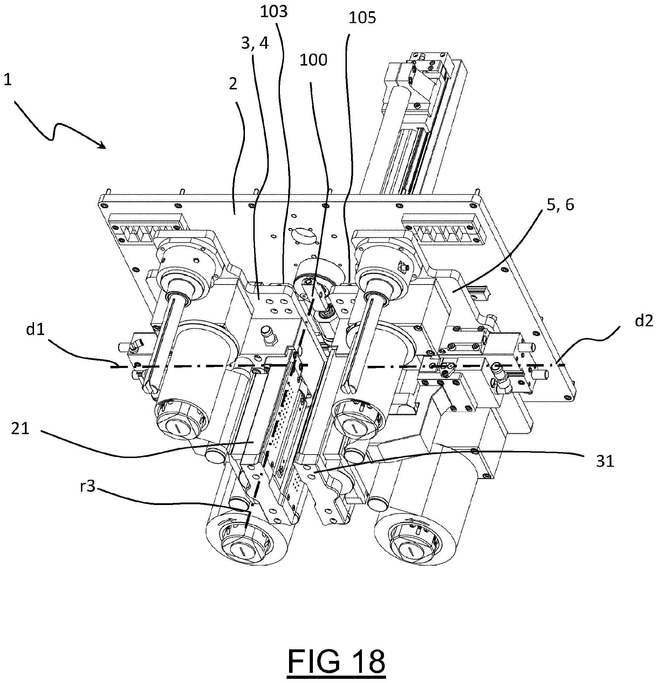

Figures 18 to 21 refer to a further embodiment of an apparatus for joining a first electrode web to a second electrode web for implementing a change of coil of electrode web for the production of electrochemical cells in accordance with the present invention.

The apparatus 1 of figures 18-21 is analogous to the apparatus described above and additionally has a spacer 100 mounted on the fixed support 2. The spacer 100 is rotatably mounted about a spacer rotation axis r3 (figure 18). The spacer rotation axis r3 is perpendicular to the first sliding direction d1 and the second sliding direction d2.

The spacer 100 is shaped, in plane in a view orthogonal to the spacer rotation axis r3, substantially rectangular and comprises two short sides 100a parallel to each other and two long sides 100b parallel to each other and perpendicular to the short sides 100a.

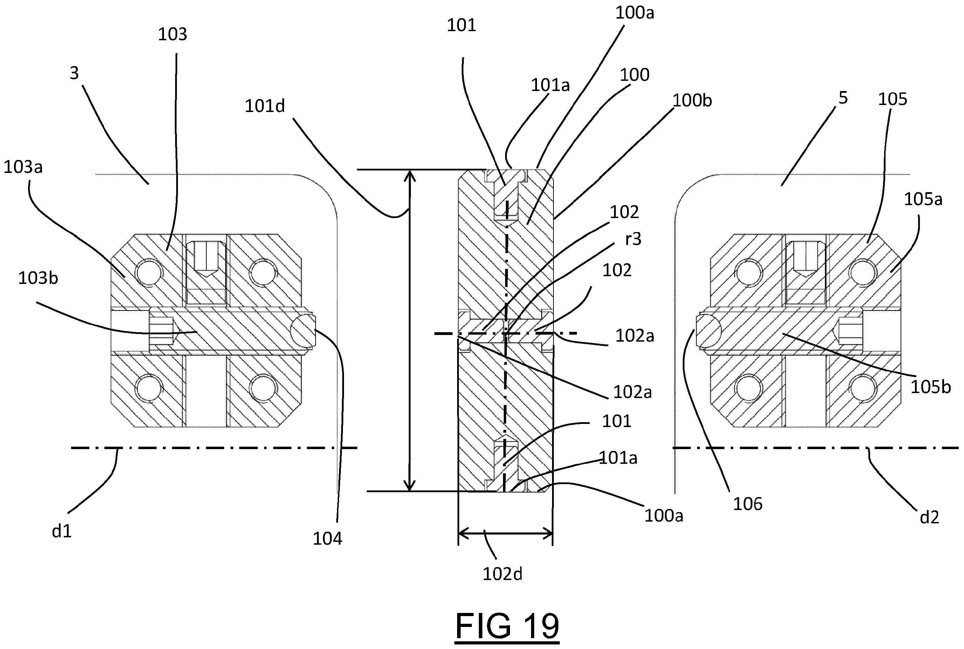

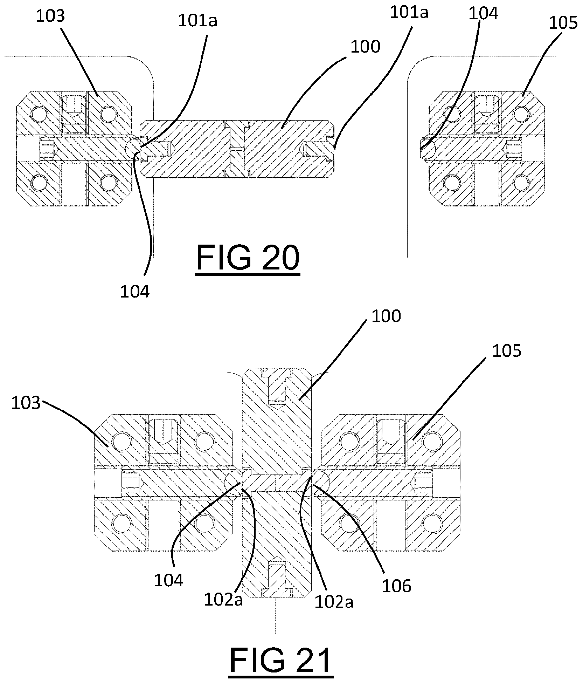

The spacer 100 is rotatable about the spacer rotation axis r3 between a first abutment position, illustrated in figure 20, and a second abutment position, illustrated in figures 19 and 21.

The spacer 100 comprises two first adjustment screws 101. The first adjustment screws 101 are screwable and unscrewable perpendicularly to the spacer rotation axis r3. Each first adjustment screw 101 is placed at a respective short side 100a.

A first abutment surface 101a is defined on each first adjustment screw 101. The two first abutment surfaces 101a are parallel to each other. The two first abutment surfaces 101a are placed at a first mutual distance 101d, illustrated in figure 19. The first distance 101d is adjustable by screwing or unscrewing one or both of the first adjustment screws 101.

The spacer 100 comprises two second adjustment screws 102. The second adjustment screws 102 are screwable and unscrewable perpendicularly to the spacer rotation axis r3. The second adjustment screws 102 are screwable and unscrewable in a direction perpendicular to the screwing and unscrewing direction of the first adjustment screws 101. Each second adjustment screw 102 is placed at a respective long side 100b.

A second abutment surface 102a is defined on each second adjustment screw 102. The two second abutment surfaces 102a are parallel to each other. The two second abutment surfaces 102a are perpendicular to the first abutment surfaces 101a. The two second abutment surfaces 102a are placed at a second mutual distance 102d. The second distance 102d is adjustable by screwing or unscrewing one or both of the second adjustment screws 102. The second distance 102d is perpendicular to the first distance 101d. The second distance 102d among the second abutment surfaces 102a is smaller than the first distance 102d among the first abutment surfaces 101a, regardless of the adjustment of the first adjustment screws 101 and of the second adjustment screws 102.

In the first abutment position (figure 20), the first distance 101d among the first abutment surfaces 101a is oriented parallel to the first sliding direction d1 and to the second sliding direction d2. In the first abutment position, the second distance 102d among the second abutment surfaces 102a is oriented perpendicular to the first sliding direction d1 and to the second sliding direction d2.

In the second abutment position (figure 21), the second distance 102d among the second abutment surfaces 102a is oriented parallel to the first sliding direction d1 and to the second sliding direction d2. In the second abutment position, the first distance 101d among the second abutment surfaces 101a is oriented perpendicular to the first sliding direction d1 and to the second sliding direction d2.

The first abutment position and the second abutment position are angularly distanced by 90°.

A first stopping member 103 is fixed to the first movement device 3, in particular to the first support carriage 4, so as to move integrally with the first retaining device 21 along the first sliding direction d1.

The first stopping member 103 comprises a block 103a fixed to the first support carriage 4 and an adjustment device 103b movable with respect to the block 103a parallel to the first sliding direction d1. In the illustrated embodiment, the adjustment device 103b is a screw in threaded engagement with a hole obtained in the block 103a.

The first stopping member 103 comprises a first stopping surface 104, defined at one end of the adjustment device 103b. The first stopping surface 104 is orthogonal to the first sliding direction d1. The adjustment device 103b allows to adjust the position of the first stopping surface 104 along the first sliding direction d1, in particular by screwing or unscrewing the screw in the respective hole.

As illustrated in figure 20, the first stopping surface 104 is configured to abut against one of the first abutment surfaces 101 when the spacer 100 is in the first abutment position to stop the first movement device 3 in the cutting position. By adjusting the position of the first stopping surface 104 and of the respective first abutment surface 101a it is possible to precisely adjust the position of the first retaining device 21 in the cutting position with respect to the cutting device 90.

As illustrated in figure 21, the first stopping surface 104 is configured to abut against one of the second abutment surfaces 102a when the spacer 100 is in the second abutment position to stop the first movement device 3 in the approached position. By adjusting the position of the first stopping surface 104 and of the respective second abutment surface 102a it is possible to precisely adjust the position of the first retaining device 21 in the approached position.

A second stopping member 105 is fixed to the second movement device 5, in particular to the second support carriage 6, so as to move integrally with the second retaining device 31 along the second sliding direction d2. The second stopping member 105 is analogous to the first stopping member 103.

The second stopping member 105 comprises a block 105a fixed to the second support carriage 6 and an adjustment device 105b movable with respect to the block 105a parallel to the second sliding direction d2. In the illustrated embodiment, the adjustment device 105b is a screw in threaded engagement with a hole obtained in the block 105a.

The second stopping member 105 comprises a second stopping surface 106, defined at one end of the adjustment device 105b. The second stopping surface 106 is orthogonal to the second sliding direction d2. The adjustment device 105b allows to adjust the position of the second stopping surface 106 along the second sliding direction d2, in particular by screwing or unscrewing the screw in the respective hole.

Similarly to the first stopping surface 104, the second stopping surface 106 is configured to abut against one of the first abutment surfaces 101a when the spacer 100 is in the first abutment position to stop the second movement device 5 in the cutting position. By adjusting the position of the second stopping surface 106 and of the respective first abutment surface 101a it is possible to precisely adjust the position of the second retaining device 31 in the cutting position with respect to the cutting device 90.

As illustrated in figure 21, the second stopping surface 106 is configured to abut against one of the second abutment surfaces 102a when the spacer 100 is in the second abutment position to stop the second movement device 5 in the approached position. By adjusting the position of the second stopping surface 106 and of the respective second abutment surface 102a it is possible to precisely adjust the position of the second retaining device 31 in the approached position. It is thus possible to adjust the distance between the first retaining device 21 and the second retaining device 31 in the respective approached positions.

In a method for joining a first electrode web to a second electrode web for implementing a change of coil of electrode web for the production of electrochemical cells, the first electrode web f1 is provided partially unwound from the first electrode web coil 83. The first electrode web f1 comprises the first piece of electrode web s1 of not-wound web. The first piece of electrode web s1 is defined by the first portion s1a and by the second portion s1b and arranged along the first advancement path p1 (figure 7).

The first electrode web f1 is fed to the forming station of an electrochemical cell (downstream of the apparatus 1 and not shown) along the first advancement path p1 by rotating the first coil of electrode web 83.

While the first electrode web f1 is fed to the forming station, the second electrode web f2 is provided partially unwound from a second coil of electrode web 84, preferably a new coil. The second electrode web f2 comprises the not-wound second piece of electrode web s2 defined by the first portion s2a and by the second portion s2b. The second piece of electrode web s2 is arranged along the second advancement path p2.

In order to provide the second electrode web f2, this is unwound along the second advancement path p2 by rotating the second coil of electrode web 84. A longitudinal end of the second electrode web f2, unwound from the second coil of electrode web 84 positioned upstream of the second piece of electrode web s2 is constrained to the winder of second electrode web 16. This operation can be done manually by an operator. By winding the second end to the winder of second electrode web 16, a predetermined traction is exerted on the second piece of electrode web s2 to tension it along the second advancement path p2.

Subsequently, the unwinding of the second coil of electrode web 84 is stopped. Upon stopping the second coil of electrode web 84, the second electrode web f2 comprises the second piece of electrode web s2 of not-wound web (figure 7).

Figure 16 is a conceptual representation of the operational step illustrated in figure 7, to highlight some geometric relationships between the main elements of the method, in accordance with preferred embodiments.

The first piece of electrode web s1 is arranged along the first advancement path p1 and the second piece of electrode web s2 is arranged along the second advancement path p2, the advancement paths p1, p2 being arranged side by side. In particular, the advancement paths p1, p2 are arranged in parallel, at least at the first and second retaining devices which retain the first and second pieces of electrode web s1, s2.

The cutting direction d3 lies on a plane section, indicated with v in figure 16, whose plane comprises the direction d3 and is perpendicular to the advancement paths p1, p2. The positions of the retaining devices (i.e. distanced, approached and cutting positions) belong to said plane section.

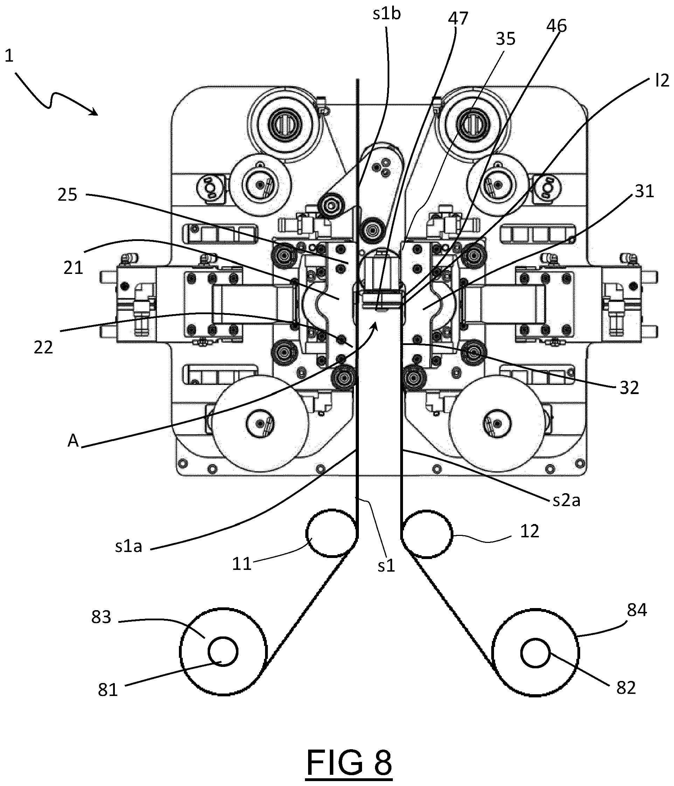

Subsequently, the first portion s2a of the second piece of electrode web s2 with a second free end l2 is provided (figure 8). The second free end l2 is transverse and preferably perpendicular with respect to the second advancement path p2.

To provide the first portion s2a of the second piece of electrode web s2 with a second free end l2, the second piece of electrode web s2 is retained by means of the second retaining device 31. Both the first portion s2a and the second portion s2b of the second piece of electrode web s2 are retained.

In particular, the first portion s2a is retained by means of the first retaining element 32 and the second portion s2b is retained by means of the second retaining element 35. While the first portion s2a and the second portion s2b of the second piece of electrode web s2 are retained, the second piece of electrode web s2 is cut to physically separate the first portion s2a from the second portion s2b of the second piece of electrode web s2.

To cut the second piece of electrode web s2, the second retaining device 31 is moved from the distanced position to the cutting position. This is done by continuing to retain both the first portion s2a and the second portion s2b of the second piece of electrode web s2.

In the embodiment of figures 18-21, before moving the second retaining device 31 from the distanced position to the cutting position, the spacer 100 is provided in the first abutment position. The second retaining device 31, by moving from the distanced position to the cutting position, is stopped in the cutting position when the second stopping member 105 abuts against the spacer 100, in particular when the second stopping surface 106 abuts against the respective first abutment surface 101a.

While the second piece of electrode web s2 is cut, the first retaining device 21 is kept in the distanced position.

To cut the second piece of electrode web s2, a cutting stroke of the cutting device 90 is implemented. The blade 47 is made to slide against the second counter-blade 46 between the plurality of active positions.

The cutting position of the second retaining device corresponds to the position of the blade 47 which, in the active positions of the cutting device 90, slides along the direction d3 perpendicular to the sliding directions d1, d2 of the retaining devices (figures 4 and 16).

By cutting the second piece of electrode web s2, the second free end of the first portion s2a of the second piece of electrode web s2 is formed.

Preferably, while the second piece of electrode web s2 is cut, the deflector 50 presses the first piece of electrode web s1 against the first retaining device 21 to keep it spaced apart from the blade 47 (figure 8).

During the cutting of the second piece of electrode web s2, the second rotating body 44 is arranged in the cutting abutment position in which the second counter-blade 46 is placed between the first and the second retaining element 33, 35.

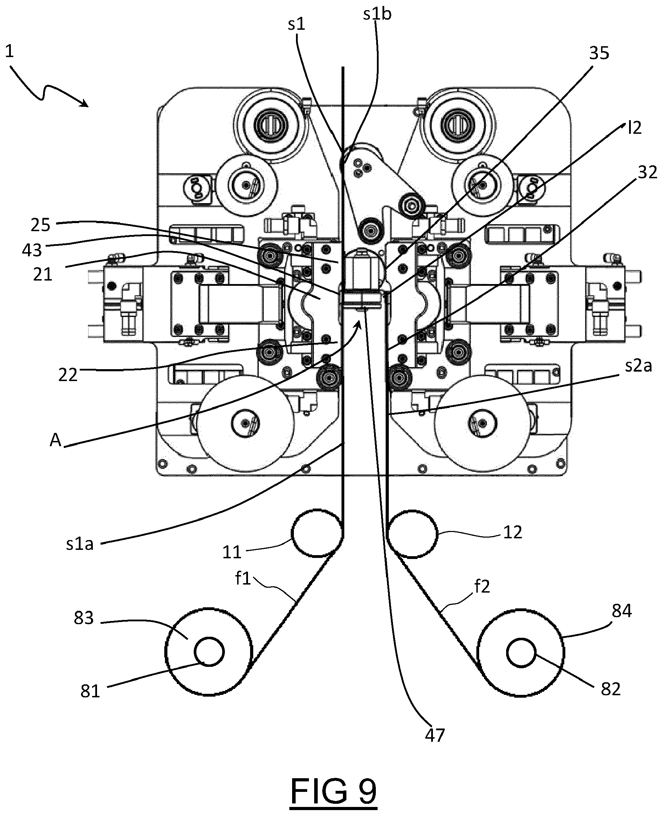

Subsequently, the second free end l2 of the first portion s2a of the second piece of electrode web s2 is retained with the second retaining device 31. This is done by continuing to retain the first portion s2a with the first retaining element 32 after cutting the second piece of electrode web s2. Subsequent to cutting, the second portion s2b of the second piece of electrode web s2 is removed so as to disengage the second retaining element 35 (figure 9).

Preferably, the first portion s2a of the second piece of electrode web s2 is provided with the second free end l2 before the second portion s1b of the first piece of electrode web s1 is provided with the first free end l1.

The second portion s1b of the first piece of electrode web s1 is provided with a first free end l1. The first free end l1 is transverse and preferably perpendicular to the first advancement path p1.

To provide the second portion s1b of the first piece of electrode web s1 with a first free end l1, the unwinding of the first coil of electrode web 83 is stopped. Upon stopping the first coil of electrode web 83, the first electrode web f1 comprises the first piece of electrode web s1 of not-wound web. Subsequently, both the first portion s1a and the second portion s1b of the first piece of electrode web s1 are retained by means of the first retaining device 21. The first portion s1a is retained by means of the first retaining element 22 and the second portion s1b is retained by means of the second retaining element 25. While the first portion s1a and the second portion s1b of the first piece of electrode web s1 are retained, the first piece of electrode web s1 is cut to physically separate the first portion s1a from the second portion s1b of the first piece of electrode web s1.

By cutting the first piece of electrode web s1, the first free end of the second portion s1b of the first piece of electrode web s1 is formed.

In this way the first portion s2a of the second electrode web f2 is positioned upstream of the second portion s1b of the first electrode web f1, with respect to the advancement paths of the respective webs.

To cut the first piece of electrode web s1, the first retaining device 21 is moved from the distanced position to the cutting position. This is done by continuing to retain both the first portion s1a and the second portion s1b of the first piece of electrode web s1.

In the embodiment of figures 18-21, before moving the first retaining device 21 from the distanced position to the cutting position, the spacer 100 is provided in the first abutment position. The first retaining device 21, by moving from the distanced position to the cutting position, is stopped in the cutting position when the first stopping member 103 abuts against the spacer 100, in particular when the first stopping surface 104 abuts against the respective first abutment surface 101a.

While the first piece of electrode web s1 is cut, the second retaining device 31 is kept in the distanced position.

To cut the first piece of electrode web s1, a cutting stroke of the cutting device 90 is implemented. The blade 47 is made to slide against the first counter-blade 43 between the plurality of active positions.

Preferably, while the first piece of electrode web s1 is cut, the deflector 50 presses the second piece of electrode web s2 against the second retaining device 31 to keep it spaced apart from the blade 47.

During the cutting of the first piece of electrode web s1, the first rotating body 41 is arranged in the cutting abutment position, in which the first counter-blade 43 is placed between the first and the second retaining element 22, 25.

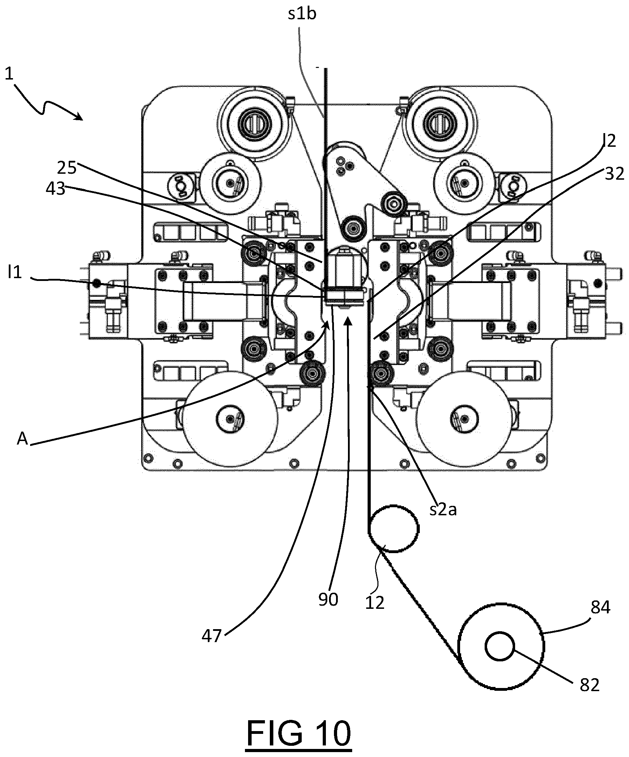

Subsequently, the first free end l1 of the second portion s1b of the first piece of electrode web s1 is retained with the first retaining device 21, in particular with the second retaining element 25. With the cutting, the first portion s1a of the first piece of electrode web s1 is removed so as to disengage the first retaining element 22 (figure 10).

Subsequently, the second free end l2 is provided at the first free end l1.

Preferably, the free ends face each other in a head-to-head alignment.

Preferably, the first and second free ends are arranged at a mutual distance of less than or equal to 10 mm, preferably less than or equal to 6 mm, even more preferably less than or equal to 3 mm.

Preferably, the first free end and the second free end have a mutual distance of not less than 1 mm, for example a mutual distance comprised between 1 and 2 mm. A small distance between the free ends l1, l2 of the webs and therefore between the respective retaining devices on the lying plane g can avoid any collisions between the parts.

The present invention may however comprise embodiments in which the first free end l1 and the second free end l2 are in direct contact with each other.

To provide the first free end l1 in alignment with the second free end l2, the first retaining device 21 and the second retaining device 31 are moved into mutual approach to bring the first free end l1 of the second portion s1b of the first piece s1 in mutual approach with the second free end l2 of the first portion s2a of the second piece of electrode web s2. The first retaining device 21 and the second retaining device 31 are brought to the respective approached positions to position the second portion s1b of the first piece of electrode web s1 at the first portion s2a of the second piece of electrode web s2.

In the embodiment of figures 18-21, before moving the first retaining device 21 and the second retaining device 31 into the respective approached positions, the spacer 100 is provided in the second abutment position by rotating the spacer 100 by 90°. The first retaining device 21 and the second retaining device 31 are stopped in the approached position when the first stopping member 103 and the second stopping member 105 abut against the spacer 100, in particular when the first stopping surface 104 stops against the respective second abutment surface 102a and the second stopping surface 106 stops against the other abutment surface 102a.

Preferably, the first free end l1 and the second free end l2 are brought into mutual approach without overlaps of the first piece s1 with the second piece of electrode web s2 or vice versa so as to have a head-to-head alignment between the first and second electrode webs f1, f2.

Subsequently, the first portion s1a of the first piece of electrode web s1 is joined with the second portion s2a of the second piece of electrode web s2. To join the first portion s1a of the first piece of electrode web s1 with the second portion s2a of the second piece of electrode web s2, at least the first adhesive patch 69b is applied at the first free end l1 and the second free end 12. Preferably, the first adhesive patch 69b is applied by means of the first applicator 60a and the second adhesive patch 79b is applied by means of the second applicator 70a.

To join the first electrode web f1 to the second electrode web f2, the first adhesive tape n1 is unwound from the first feeding coil b1 along the first unwinding path 63. The first adhesive tape n1 comprises the unwound first piece of adhesive tape b1a which is positioned between the first part n1a of the first adhesive tape n1 upstream and the second part n1b of the first adhesive tape n1 downstream along the first unwinding path 63.

To unwind the first adhesive tape n1, the first piece of adhesive tape b1a is arranged between the first punch 66 and the first punching base 64.

Subsequently, an inner portion of adhesive tape is cut away from the first piece of adhesive tape b1a. The inner portion is thus separated from a residual edge portion 69a extending along the first unwinding path 63. The residual edge portion 69a thus keeps the first part n1a of the first adhesive tape n1 in connection with the second part n1b of the first adhesive tape n1. The inner portion forms the first adhesive patch 69b.

While the inner portion is cut away from the first piece of adhesive tape b1a, the first adhesive tape n1 is tensioned between the first winder 69 and the first feeding coil b1. To tension the first adhesive tape n1, a traction is exerted on its residual edge portion 69a.

After cutting the first piece of electrode web s1 of the first electrode web f1 and the second piece of electrode web s2 of the second electrode web f2, and before cutting away from the first piece of adhesive tape b1a the inner portion, the first rotating body 41 is switched from the cutting abutment position to the non-operating position.

To cut away from the first piece of adhesive tape b1a the inner portion, the first piece of adhesive tape b1a is punched by means of the first punch 66.

Subsequently, the first adhesive patch 69b is applied at both the first free end I1 and the second free end I2. To apply the first adhesive patch 69b, the first adhesive patch 69b is retained on the suction surface 68 of the first punch 66 by a suction action exerted on the first adhesive patch 69b through the suction surface 68. While the first adhesive patch 69b is retained, the first punch 66 is moved along the first punching direction 66a up to the first free end I1 and the second free end I2. Preferably the first adhesive patch 69b is cut away and applied in a single uninterrupted straight movement of the first punch 66 towards the first piece of adhesive tape b1a, along the first punching direction 66a and up to the first free end I1 and the second free end I2.

During the movement of the first punch 66 towards the first piece of adhesive tape b1a and up to the first free end I1 and the second free end 12 the first punch 66 is inserted into the punching opening 65 of the first punching base 64 and into the passage opening 42 of the first rotating body 41 in the non-operating position.

Subsequently, the first adhesive patch 69b is finished being retained to the first punch 66 and the first punch 66 is retracted into the rest configuration.

Subsequently, the residual edge portion 69a of the first adhesive tape n1 is wound on the first winder 69.

Further, to join the first electrode web f1 to the second electrode web f2, the second adhesive tape n2 is unwound from the second feeding coil b2 along the second web unwinding path 73. The second adhesive tape n2 comprises the unwound second piece of adhesive tape b2a which is positioned between the first part n2a of the second adhesive tape n2 upstream and the second part n2b of the second adhesive tape n2 downstream along the second web unwinding path 73.

To unwind the second adhesive tape n2, the second piece of adhesive tape b2a is arranged between the second punch 76 and the second punching base 74.

Subsequently, an inner portion of the adhesive tape is cut away from the second piece of adhesive tape b2a. The inner portion is thus separated from a residual edge portion extending along the second web unwinding path 73. The residual edge portion thus keeps the first part n2a of the second adhesive tape n2 in connection with the second part n2b of the second adhesive tape n2. The inner portion forms the second adhesive patch 79b.

While the inner portion is cut away from the second piece of adhesive tape b2a, the second adhesive tape n2 is tensioned between the second winder 79 and the second feeding coil b2. To tension the second adhesive tape n2, a traction is exerted on its residual edge portion.

After cutting the first piece of electrode web s1 of the first electrode web f1 and the second piece of electrode web s2 of the second electrode web f2, and before cutting away from the first piece of adhesive tape b1a the inner portion, the second rotating body 44 is switched from the cutting abutment position to the non-operating position.

To cut away from the second piece of adhesive tape b2a the inner portion, the second piece of adhesive tape b2a is punched by means of the second punch 76.

Subsequently, the second adhesive patch 79b is applied at both the first free end I1 and the second free end I2.

To apply the second adhesive patch 79b, the second adhesive patch 79b is retained on the suction surface 78 of the second punch 76 by a suction action exerted on the second adhesive patch 79b through the suction surface 78. While the second adhesive patch 79b is retained, the second punch 76 is moved along the second punching direction 76a up to the first free end I1 and the second free end I2. Preferably the second adhesive patch 79b is cut away and applied in a single uninterrupted straight movement of the first punch 76 towards the second piece of adhesive tape b2a, along the second punching direction 76a and up to the first free end I1 and the second free end I2.

During the movement of the second punch 76 towards the second length of adhesive tape b2a and up to the first free end I1 and the second free end I2, the second punch 76 is inserted into the punching opening 75 of the second punching base 74 and into the passage opening 45 of the second rotating body 44 in the non-operating position.

Subsequently, the second adhesive patch 79b is finished being retained to the second punch 76 and the second punch 76 is retracted into the rest configuration.

Subsequently, the residual edge portion of the second adhesive tape n2 is wound on the second winder 79.

Subsequent to joining between the second portion s1b of the first piece of electrode web s1 and the first portion s2a of the second piece of electrode web s2, the second portion s1a of the first piece of electrode web s1 is released from the first retaining device 21 and the first portion s2a of the second piece of electrode web s2 from the second retaining device 31.

Preferably, the second adhesive patch 79b is applied simultaneously to the first adhesive patch 69b, on the opposite side to the first free end I1 and to the second free end I2 with respect to the first adhesive patch 69b.

Subsequent to cutting the first and second adhesive patches 69b, 79b, the first and second adhesive patches 69b, 79b are retained by the respective suction surfaces of the first and second punches 66, 76, and the first and second punches apply the respective adhesive patches 69b, 79b to the respective opposite sides of the second portion s1b of the first piece of electrode web s1 with the first portion s2a of the second piece of electrode web s2 simultaneously. In particular, the first punch 66 and the second punch 76 perform an uninterrupted rectilinear movement along the first punching direction 66a and the second punching direction 76a simultaneously. The first punching direction 66a is aligned with the second punching direction 76a, and has opposite direction.

In this way, the first punch 66 acts as an abutment element for the second punch 76 and vice versa.

It can also be observed that the electrodes tend to be very dusty and sometimes even greasy. So at the rollers the webs tend to detach from the adhesive. An application of adhesive tape on both sides of the end parts of the electrode webs improves the seal of the junction.

The person skilled in the art will recognize that it is possible to combine the various characteristics of the embodiments described above to obtain further embodiments, all falling within the scope of the present invention as defined by the subsequent claims.

## Claims

1. Method for joining a first electrode web to a second electrode web to implement a change of coil of electrode web for the production of electrochemical cells, comprising:
- providing a first free end (11) of a first electrode web (n1), said first electrode web (f1) comprising a first surface portion (t1a) extending from said first free end (11) and a second surface portion (t1b) extending from said first free end (11), opposite to said first surface portion (t1a);
- providing a second free end (I2) of a second electrode web (f2) at said first free end (11) of the first electrode web (f1), said second electrode web (f2) comprising a first surface portion (t2a) extending from said second free end (I2) and a second surface portion (t2b) extending from said second free end (I2), opposite to said first surface portion (t2a);
- applying a first connection element (60b) at said first free end (11) and second free end (I2) by shifting a first applicator (60a) towards said first surface portion (t1a) of the first electrode web (f1) and first surface portion (t2a) of the second electrode web (f2) and releasing said first connection element (60b) from said first applicator (60a);
- applying a second connection element (70b) at said first free end (11) and second free end (I2) by shifting a second applicator (70a) towards said second surface portion (t1b) of the first electrode web (f1) and second surface portion (t2b) of the second electrode web (f2) and releasing said second connection element (70b) from said second applicator (70a).

2. Method according to claim 1, wherein applying said first connection element (60b) and applying said second connection element (70b) are performed simultaneously.

3. Method according to claim 1 or 2, wherein providing said first free end (11) and providing said second free end (I2) comprise aligning said first electrode web (f1) and second electrode web (f2) to a common lying plane (g) at said first free end (11) and second free end (I2), and wherein said first connection element (60b) and said second connection element (70b) are applied specularly with respect to said lying plane (g).

4. Method according to any one of the preceding claims, wherein applying said first connection element (60b) comprises pressing said first applicator (60a) against said first surface portion (t1a) of the first electrode web (f1) and first surface portion (t2a) of the second electrode web (f2) and applying said second connection element (70b) comprises pressing said second applicator (70a) against said second surface portion (t1b) of the first electrode web (f1) and second surface portion (t2b) of the second electrode web (f2).

5. Method according to claim 4, wherein pressing said first applicator (60a) and pressing said second applicator (70a) comprises pressing said first applicator (60a) and second applicator (70a) in reciprocal opposition keeping said first free end (11) and second free end (I2) between said first applicator (60a) and second applicator (70a).

6. Method according to any one of the preceding claims,
wherein applying said first connection element (60b) comprises retaining said first connection element (60b) to said first applicator (60a) while said first applicator (60a) is shifted towards said first surface portion (t1a) of the first electrode web (f1) and first surface portion (t2a) of the second electrode web (f2),
and wherein applying said second connection element (70b) comprises retaining said second connection element (70b) to said second applicator (70a) while said second applicator (70a) is shifted towards said second surface portion (t1b) of the first electrode web (f1) and second surface portion (t2b) of the second electrode web (f2).

7. Method according to any one of the preceding claims, wherein said first connection element (60b) is an adhesive element and wherein said second connection element (70b) is an adhesive element.

8. Method according to any one of the preceding claims, wherein providing the first free end (11) of the first electrode web (f1) comprises at least partially unwinding the first electrode web (f1) from a first coil of electrode web (83) and wherein providing the second free end (I2) of the second electrode web (f2) comprises at least partially unwinding the second electrode web (f2) from a second coil of electrode web (84).

9. Method according to claim 8, wherein said at least partially unwound first electrode web (f1) comprises a not-wound first piece of electrode web (s1) defined by a first portion (s1a) and by a second portion (s1b); and said at least partially unwound second electrode web (f2) comprises a not-wound second piece of electrode web (s2) defined by a first portion (s2a) and by a second portion (s2b);
wherein providing the first free end (11) of the first electrode web (f1) comprises cutting said first piece of electrode web (s1) to separate the first portion (s1a) from the second portion (s1b) and defining the first free end (11) on the second portion (s1b); and
wherein providing the second free end (I2) of the second electrode web (f2) comprises cutting said second piece of electrode web (s2) to separate the second portion (s2b) from the first portion (s2a) and defining the second free end (I2) on the first portion (s2a).

10. Method according to any one of the preceding claims, wherein providing the first free end (11) of the first electrode web (f1) comprises retaining the first free end (11) with a first retaining device (21); and wherein providing the second free end (I2) of the second electrode web (f2) comprises retaining the second free end with (I2) a second retaining device (31).

11. Apparatus (1) for joining a first electrode web to a second electrode web to implement a change of coil of electrode web for the production of electrochemical cells, comprising:
- a first retaining device (21) configured to retain a first free end (11) of a first electrode web (f1) keeping the first free end (11) in a junction area (A), said first electrode web (f1) comprising a first surface portion (t1a) extending from said first free end (11) and a second surface portion (t1b) extending from said first free end (11), opposite to said first surface portion (t1a);
- a second retaining device (31) configured to retain a second free end (I2) of a second electrode web (f2) keeping the second free end (I2) in said junction area (A) at said first free end (11), said second electrode web (f2) comprising a first surface portion (t2a) extending from said second free end (I2) and a second surface portion (t2b) extending from said second free end (I2), opposite to said first surface portion (t2a);
- a first applicator (60a) movable between a rest position external to said junction area (A) and an application position in said junction area (A) in which said first applicator (60a) is configured to apply a first connection element (60b) at said first free end (11) and second free end (I2), on the first surface portion (t1a) of the first electrode web (f1) and on the first surface portion (t2a) of the second electrode web (f2);
- a second applicator (70a) movable between a rest position external to said junction area (A) and an application position in said junction area (A) wherein said second applicator (70a) is configured to apply a second connection element (70b) at said first free end (11) and second free end (I2), on the second surface portion (t1b) of the first electrode web (f1) and on the second surface portion (t2b) of the second electrode web (f2).

12. Apparatus (1) according to claim 11, wherein said first retaining device (21) and said second retaining device (31) are configured to bring said first electrode web (f1) and second electrode web (f2) into alignment along a common lying plane (g) at said first free end (11) and second free end (I2), and wherein said first applicator (60a) and second applicator (70a) are configured to shift between respective rest and application positions specularly with respect to said lying plane (g).

13. Apparatus (1) according to claim 11 or 12, wherein said first applicator (60a), in the respective application position, is configured to press said first connection element (60b) towards said second applicator (70a) and wherein said second applicator (70a), in the respective application position, is configured to press said second connection element (70b) towards said first applicator (60a).

14. Apparatus (1) according to any one of the preceding claims from 11 to 13, wherein said first applicator (60a) comprises a first retaining surface (67) configured to retain said first connection element (60b) while said first applicator (60a) shifts towards the respective application position and wherein said second applicator (70a) comprises a second retaining surface (77) configured to retain said second connection element (70b) while said second applicator (70a) shifts towards the respective application position.

15. Electrode web semi-finished product for the production of electrochemical cells comprising:
- a first electrode web (f1) extending along a plurality of processing stations of an electrochemical cell production line, said first electrode web (f1) comprising a first free end (I1), a first surface portion (t1a) extending from said first free end (11) and a second surface portion (t1b) extending from said first free end (11), opposite to said first surface portion (t1a);
- a second electrode web (f2) partially wound into a coil of electrode web (84) and partially unwound from said coil of electrode web (84), said second electrode web (f2) comprising a second free end (I2) unwound from said coil of electrode web (84) and arranged at said first end (11) of the first electrode web (f1), a first surface portion (t2a) extending from said second free end (I2) and a second surface portion (t2b) extending from said second free end (I2), opposite to said first surface portion (t2a);
- a first connection element (60b) attached to said first surface portion (t1a) of the first electrode web (f1) and first surface portion (t2a) of the second electrode web (f2), at said first free end (11) and second free end (I2);
- a second connection element (70b) attached to said second surface portion (t1b) of the first electrode web (f1) and second surface portion (t2b) of the second electrode web (f2), at said first free end (11) and second free end (I2).
